# EUROPEAN PATENT APPLICATION

(11) **EP 2 213 634 A1**
(43) Date of publication of application: **04.08.2010**
(21) Application number: 10164614.9
(22) Date of filing: 20.11.2008
(51) Int. Cl.: C03C 13/00, C04B 35/622, C04B 35/653

(54) **Inorganic fibre compositions**

(30) Priority: 23.05.2008 GB 0809462; 23.11.2007 WO PCT/GB2007/004509
(62) Divisional of application: 08852481.4
(71) Applicant: THE MORGAN CRUCIBLE COMPANY PLC, Windsor, Berkshire SL4 1LP (GB)
(72) Inventor: Boff, James, London, EC4A 3BA (GB); Jubb, Gary, Bromborough, Wirral, CH62 3PH (GB); Mottram, Robin, Bromborough, Wirral, CH62 3PH (GB)
(74) Representative: Phillips & Leigh

(57) **Abstract**

Inorganic fibres are disclosed in which the constituents SiO₂, Al₂O₃, K₂O, and MgO are present in the amounts:-
Al₂O₃
30.7±5 mol%
K₂O
20.4±5 mol%
SiO₂
49±5.5 mol%.
MgO
0.1-10 mol%
with the total constituents not exceeding 100mol%.

## Description

This invention relates to inorganic fibre compositions.

Fibrous materials are well known for their use as thermal and/or acoustic insulating materials and are also known for their use as strengthening constituents in composite materials such as, for example, fibre reinforced cements, fibre reinforced plastics, and as a component of metal matrix composites. Such fibres may be used in support structures for catalyst bodies in pollution control devices such as automotive exhaust system catalytic converters and diesel particulate filters. Such fibres may be used as a constituent of friction materials [e.g. for automotive brakes]. The fibres of the present invention have a range of properties and may be usable in any or all of these applications depending on the properties shown.

Prior to 1987 there were four principle types of fibrous materials used for making thermal insulation products [such as, for example, blanket, vacuum formed shapes, and mastics]. These were made by two principal manufacturing routes, although the details of the particular routes vary according to manufacturer. The fibres and routes were (in order of increasing cost and temperature performance):-
Melt formed fibres
   - Mineral wools
   - Glass wools
   - Aluminosilicate fibres
Sol-gel process fibres
   - So-called polycrystalline fibres
Melt formed fibres are formed by making a melt and fiberising the resultant melt by any one of the many known methods. These methods include:-
   - forming a stream of melt and allowing the stream to contact spinning wheels from which it is flung to form fibres
   - forming a stream of melt and allowing the stream to impinge upon a jet of gas that may be transverse, parallel with, or at an angle to the direction of the stream and thereby blasting the melt into fibres
   - forming a fibre from the melt by a rotary process in which the melt escapes through apertures in the circumference of a spinning cup and is blasted by hot gases to form fibres
   - extruding the melt through fine apertures to form filaments, and in which further treatment may be used [e.g. flame attenuation in which the filament is passed through a flame]
   - or any other method by which a melt is converted into a fibre.
   Because of the history of asbestos fibres, a lot of attention has been paid to the relative potency of a wide range of fibre types as a cause of lung disease. Studies of the toxicology of natural and man-made fibres led to the idea that it was the persistence of fibres in the lung that caused problems. Accordingly, the view developed that if fibres can be removed from the lung quickly then any risk to health would be minimised. The concepts of "biopersistent fibres" and "biopersistence" arose - fibres that last for a long time in the animal body are considered biopersistent and the relative time that fibres remain in the animal body is known as biopersistence. Whilst several glass systems were known to be soluble in lung fluids, resulting in low biopersistence, there was a problem in that such glass systems were generally not useful for high temperature applications. A market need was seen for a fibre that could have a low biopersistence combined with a high temperature capability. In 1987 Johns Manville developed such a system based on a calcium magnesium silicate chemistry. Such material not only had a higher temperature capability than traditional glass wools, but also had a higher solubility in body fluids than the aluminosilicate fibres mostly used for high temperature insulation. Such low biopersistent fibres have been developed since, and a range of alkaline earth silicate [AES] fibres are now on the market.
Patents relating to AES fibres include:
   - International Patent Application No. WO87/05007 - the original Johns-Manville application - which disclosed that fibres comprising magnesia, silica, calcia and less than 10 wt% alumina are soluble in saline solution. The solubilities of the fibres disclosed were in terms of parts per million of silicon (extracted from the silica containing material of the fibre) present in a saline solution after 5 hours of exposure.
   - International Patent Application No. WO89/12032 disclosed additional fibres soluble in saline solution and discussed some of the constituents that may be present in such fibres.
   - European Patent Application No. 0399320 disclosed glass fibres having a high physiological solubility and having 10-20mol% Na₂O and 0-5mol% K₂O. Although these fibres were shown to be physiologically soluble their maximum use temperature was not indicated.

Further patent specifications disclosing selection of fibres for their saline solubility include for example European 0412878 and 0459897, French 2662687 and 2662688, WO86/04807, WO90/02713, WO92/09536, WO93/22251, WO93/15028, WO94/15883, WO97/16386, WO2003/059835, WO2003/060016, EP1323687, WO2005/000754, WO2005/000971, and United States 5250488.

The refractoriness of the fibres disclosed in these various prior art documents varies considerably and for these alkaline earth silicate materials the properties are critically dependent upon composition.

As a generality, it is relatively easy to produce alkaline earth silicate fibres that perform well at low temperatures, since for low temperature use one can provide additives such as boron oxide to ensure good fiberisation and vary the amounts of the components to suit desired material properties. However, as one seeks to raise the refractoriness of alkaline earth silicate fibres, one is forced to reduce the use of additives, since in general (albeit with exceptions) the more components are present, the lower the refractoriness.

WO93/15028 disclosed fibres comprising CaO, MgO, SiO₂, and optionally ZrO₂ as principal constituents. Such AES fibres are also known as CMS (calcium magnesium silicate) or CMZS (calcium magnesium zirconium silicate) fibres. WO93/15028 required that the compositions used should be essentially free of alkali metal oxides. Amounts of up to 0.65wt% were shown to be acceptable for materials suitable for use as insulation at 1000°C.

WO93/15028 also disclosed methods of predicting the solubility of glasses and included a range of materials that were tested as glasses for their solubility, but not formed as fibres. Among these compositions were compositions having the reference KAS, KMAS, and KNAS which were respectively a potassium aluminosilicate, a potassium magnesium aluminosilicate, and a potassium sodium aluminosilicate. These compositions were rated as having insufficient solubility on the basis of solubility measurements in a physiological like solution. The type of physiological solution used has a pH of about 7.4.

It has subsequently been found that solubility depends on the environment within which a fibre finds itself. Although the physiological saline solution present in intercellular lung fluid approximates to that given in WO93/15028, and has a pH of around pH 7.4, the mechanism for clearing fibres involves their attack by macrophages. It is known that the pH of the physiological saline present where the macrophages contact fibres is significantly lower (around pH 4.5) and this has an effect on solubility of inorganic fibres [see *"In-vitro dissolution rate of mineral fibres at pH 4.5 and 7.4 - A new mathematical tool to evaluate the dependency an composition"* Torben Knudsen and Marianne Guldberg, Glass Sci. Technol. 78(205) No.3]. WO94/15883 disclosed a number of such fibres usable as refractory insulation at temperatures up to 1260°C or more. As with WO93/15028, this patent required that the alkali metal oxide content should be kept low, but indicated that some alkaline earth silicate fibres could tolerate higher levels of alkali metal oxide than others. However, levels of 0.3% and 0.4% by weight Na₂O were suspected of causing increased shrinkage in materials for use as insulation at 1260°C.

WO97/16386 disclosed fibres usable as refractory insulation at temperatures of up to 1260°C or more. These fibres comprised MgO, SiO₂, and optionally ZrO₂ as principal constituents. These fibres are stated to require substantially no alkali metal oxides other than as trace impurities (present at levels of hundredths of a percent at most calculated as alkali metal oxide). The fibres have a general composition
- SiO₂: 65-86%
- MgO: 14-35%
with the components MgO and SiO₂ comprising at least 82.5% by weight of the fibre, the balance being named constituents and viscosity modifiers.

WO2003/059835 discloses certain calcium silicate fibres in which La₂O₃ or other lanthanide additives are used to improve the strength of the fibres and blanket made from the fibres. This patent application does not mention alkali metal oxide levels, but amounts in the region of ∼0.5wt% were disclosed in fibres intended for use as insulation at up to 1260°C or more.

W02006/048610 disclosed that for AES fibres it was advantageous to mechanical and thermal properties to include small amounts of alkali metal oxides.

The scope of such low biopersistence fibres is limited, in that above about 1300°C they tend to deteriorate in performance.

Alternative low biopersistence fibres that have been proposed are alkaline earth aluminates. Such materials have been suggested as calcium aluminate (EP0586797) and strontium aluminate (WO96/04214). Such fibres are not produced commercially.

The applicants have developed sol-gel fibres comprising aluminosilicates having significant additions of alkaline earth metal oxides or alkali metal oxides and these are subject of International patent application No. PCT/GB2006/004182 (WO2007/054697).

The applicants have now developed an alternative fibre chemistry that provides low biopersistence fibres, for which some fibres at least are capable of providing fibres of comparable thermal performance to aluminosilicate fibres. These fibres are subject of International Patent Application No. PCT/GB07/004509 (WO2008/065363). The fibres of PCT/GB07/004509 comprise inorganic fibres having a composition comprising predominantly or exclusively Al₂O₃,_{,} K₂O, and SiO₂.

In making melt formed fibres electrical current is passed through the raw constituents to form a melt pool. While some electrical conductivity is required for this process to work, the amount of K₂O required for the fibres of PCT/GB07/004509 is such that the electrical conductivity falls so low that it is difficult to maintain the melt. Large currents are required reducing the energetic efficiency of the melting process.

The applicant has found that addition of boron to the melt [in the form of B₂O₃ or otherwise as described below] has the effect of dramatically reducing the electrical conductivity of the melt, while not adversely affecting the viscosity of the melt, and at low levels not adversely affecting the high temperature performance of fibres produced from the melt.

Additionally, the applicant has found that inclusion in the melt of magnesium in low quantities is beneficial, as magnesium acts as a grain refining agent, reducing the effect of crystallisation on the fibres. Such additions do not appear to affect fibre shrinkage at 1400°C but can be detrimental at 1500°C.

Accordingly, the present invention provides inorganic fibres in which the constituents SiO₂, Al₂O₃, K₂O, and MgO are present in the amounts:-
- Al₂O₃: 30.7±5 mol%
- K₂O: 20.4±5 mol%
- SiO₂: 49±5.5 mol%.
- MgO: 0.1 -10 mol%
with the total constituents not exceeding 100mol%

Boron may be included in amounts 0.1 to 10mol%. Sufficient boron to achieve an increase in resistivity is found at 0.1mol% High levels of boron may result in grain growth at high temperatures and so preferably the amount of boron oxide is less than 7.5 mol%, or less than 5 mol%, or less than 4.5 mol%, or less than 4 mol%, or less than 3.5 mol%, or less than 3 mol%, or less than 2.5mol% or less than 2 mol%, or less than 1.5 mol%, or less than 1 mol%, with a preferred range 0.2 - 2 mol%. For regulatory and other reasons mentioned below, a further more desired range comprises less than 3.1wt% boron oxide.

The applicants have found that additional inclusion of MgO as a minor additive achieves a grain refining effect that is desirable. However, at high levels MgO is detrimental to shrinkage and so preferably the amount of MgO is kept to a minimum, preferably below 5 mol%, or less than 3 mol%, or less than 2 mol%, or less than 1.5 mol%, or less than 1% with a preferred range 0.1 to 0.5 mol%.

In all the above described fibres the amount of SiO₂ + Al₂O₃ + K₂O may be >=90mol% with appropriate adjustment of the quantities of B₂O₃ and MgO.

The amount of K₂O may be less than 35 mol% or less than 30 mol%. The amount of K₂O may be greater than 20 mol%. A suitable range for K₂O is 13.5-30mol%, with a preferred range 20.4±5mol% with the most preferred range being 20.3±2 mol%.

The amount of Al₂O₃ may be greater than 20mol% or greater than 25mol%, and may be less than 40mol%. The range 30.7±5 mol% is preferred with the range 30.5±2 mol% being most preferred.

The amount of SiO₂ may be greater >=30 mol%, or >=35 mol%. The amount of SiO₂ may be below 80 mol% or below 70 mol%. SiO₂ may be present in the range 40-52mol% while a preferred range is 49±5.5 mol% with the range 49.1±2.25 mol% being particularly preferred.

For the avoidance of doubt it should be noted that in the present specification the word "comprises" is taken to mean "includes" and permits other ingredients to be present. It should also be noted that no claim is made to any composition in which the sum of the components exceeds 100%.

Further features of the invention are apparent from the claims and in the light of the following description and the drawings in which:-
Fig. 1 is a micrograph of fibres of a first composition in accordance with the invention
Fig. 2 is a micrograph of fibres of a second composition in accordance with the invention.
Fig. 3 is a micrograph of fibres of a third composition not in accordance with the invention.
Fig. 4 is a micrograph of fibres of a fourth composition not in accordance with the invention.

The inventors produced a range of potassium aluminosilicate fibres using an experimental rig in which a melt was formed of appropriate composition, tapped through an 8-16 mm orifice, and blown to produce fibre in a known manner. (The size of the tap hole was varied to cater for the viscosity of the melt - this is an adjustment that must be determined experimentally according to the apparatus and composition used).

Additionally, some fibres were made on a fibre development rig [a full scale production plant].
Table 1 appended hereto shows fibres made and their compositions in weight percent. Analysis was by x-ray fluorescence analysis except for boron where flame spectrometry was used. Fibres both within and outside the invention are shown.
Table 2 appended hereto shows the fibres made and their calculated compositions in mole percent.
Table 3 appended hereto shows shrinkage of the fibres made. The shrinkage was measured by the method of manufacturing vacuum cast preforms, using 75g of fibre in 500cm³ of 0.2% starch solution, into a 120 x 65mm tool. Platinum pins (approximately 0.3-0.5mm diameter) were placed 100 x 45mm apart in the 4 corners. The longest lengths (L1 & L2) and the diagonals (L3 & L4) were measured to an accuracy of ±5µm using a travelling microscope. The samples were placed in a furnace and ramped to a temperature 50°C below the test temperature at 300°C/hour and ramped at 120°C/hour for the last 50°C to test temperature and left for 24 hours. On removal from the furnace the samples were allowed to cool naturally. The shrinkage values are given as an average of the 4 measurements.
Table 4 appended hereto shows solubility of the fibres made in ppm of the major glass components after a 5 hour static test in a pH∼4.5 physiological saline solution.

A detailed procedure to measure solubility comprises weighing 0.500g ± 0.003g of fibre into a centrifuge tube using plastic tweezers. The fibre is usually chopped (6 wire mesh) and deshotted (hand sieved with 10 wire), but may be bulk or blanket if only small amounts of fibre are available. Each sample is weighed out in duplicate. 25cm³ of simulated body fluid is poured into each centrifuge tube using the graduated dispenser and the tubes sealed. The simulated body fluid is only added to the fibre at the start of the test and comprises the following ingredients in 10 litres of water.

| Reagent | Weight |
|---|---|
| NaHCO₃ | 19.5 g |
| CaCl₂·2H₂O | 0.29g |
| Na₂HPO₄ | 1.48g |
| Na₂SO₄ | 0.79g |
| MgCl₂·6H₂O | 2.12 |
| Glycine (H₂NCH₂CO₂H) | 1.18g |
| Na₃citrate·2H₂O | 1.52g |
| Na₃tartrate·2H₂O | 1.8g |
| Na pyruvate | 1.72g |
| 90% lactic acid | 1.56g |
| Formaldehyde | 15ml |
| HCl | ∼7.5ml |

with the HCl added slowly, as this is an approximate figure for pH adjustment to a final figure of ∼4.5pH. The simulated body fluid is allowed a minimum of 24hrs to equilibrate and pH is adjusted accordingly after this period.

All of the reagents used are of Analar or equivalent grade and the procedure is carried out using plastic equipment as silica leaching may occur from glassware.

The centrifuge tubes are then placed in a shaking water bath, which is held at 37°C ± 1°C (body temperature) and shaken for 5hrs. The short time of 5 hours was chosen because the solubility of some of these materials is so high that the amount of K₂O leached out can cause the pH to move to higher values, so distorting results, if longer times are used.

After shaking, the two solutions for each fibre are decanted and filtered through Whatman, 110mm diameter no. 40 ashless filter papers into one 50ml bottle. The solution is then submitted for Inductively Coupled Plasma Atomic Emission Spectroscopy (ICP). The oxides tested for will depend on the composition of the fibre being tested. The results are reported as ppm of the relevant oxide.

The fibres may include viscosity modifiers. Suitable viscosity modifiers may comprise alkali metal oxides, alkaline earth metal oxides, lanthanide elements, boron oxide, fluoride, and indeed any element or compound known in the art to affect the viscosity of silicate glasses. The amounts and type of such viscosity modifiers should be selected to accord with the end use of the fibres and with processing requirements. In PCT/GB07/004509 (WO2008/065363) it was indicated that boron oxide was likely to reduce the maximum use temperature although it may be tolerated [see fibre KAS80]. It has now been found however that boron oxide has the additional beneficial property of increasing the electrical resistivity of the melt which is beneficial when forming the fibres from a melt. As discussed above, the ionic nature of K₂O can result in a very low resistivity of the melt when high quantities are used. The applicants speculate that boron oxide inhibits movement of potassium, perhaps by forming voids in the aluminosilicate matrix that can be occupied by potassium. Such an effect may potentially be achieved by other M₂O₃ materials or it may be specific to boron which tends to have a trigonal co-ordination as opposed to the tetrahedral co-ordination of aluminium and silicon.

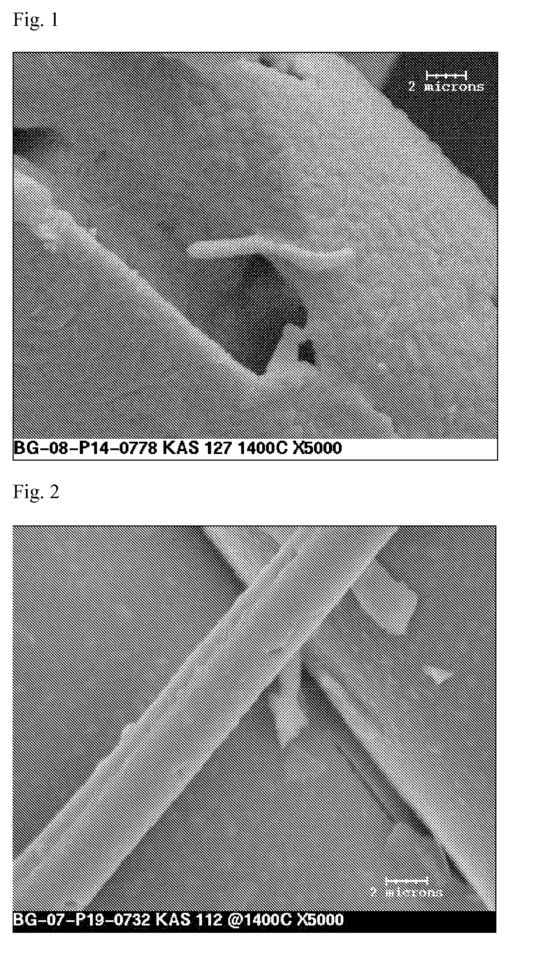

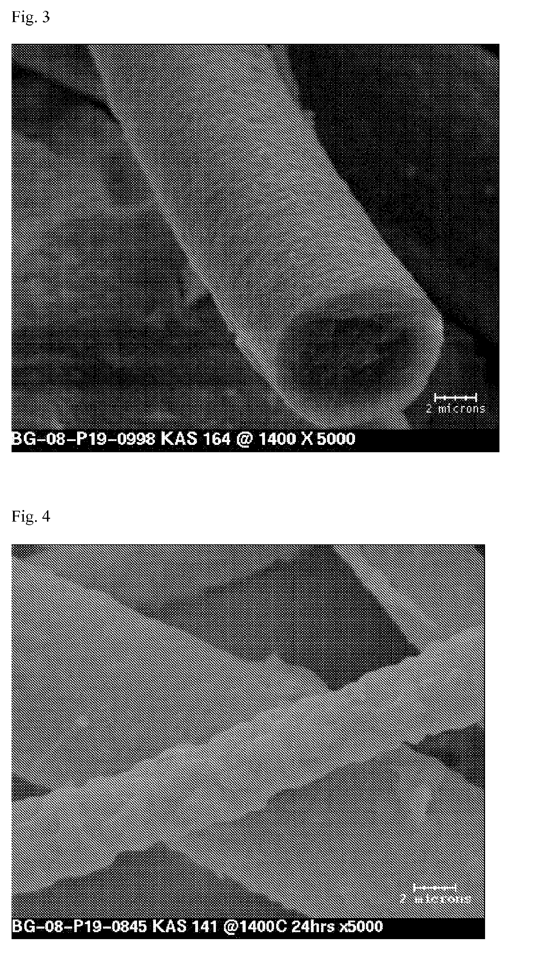

A viscosity modifier that has been found particularly useful is magnesium, which may be added as the oxide or in other form. This component also acts as a grain refining agent. Fig. 1 shows a fibre comprising 0.6wt% boron oxide [KAS 127 in the tables]. Fig. 2 shows a fibre of like composition comprising 0.7wt% boron oxide and 1.2wt% MgO [KAS 112 in the tables]. Fig.3 shows a fibre comprising no B₂O₃ or MgO [KAS 164] and Fig. 4 shows a fibre with MgO addition alone [KAS 141]. All of these figures show structure after firing the fibres to 1400°C. It can be seen that:
- the fibre with B₂O₃ alone appears coarser in surface structure than a fibre containing no B₂O₃ or MgO
- the fibre with MgO alone appears considerably coarser in surface structure than a fibre containing no B₂O₃ or MgO, or B₂O₃ alone
- the fibre with both MgO and B₂O₃ shows a finer grain structure after exposure to 1400°C than the fibres with either B₂O₃ or MgO alone, or the fibre with no addition of B₂O₃ or MgO.

The beneficial effect of MgO and B₂O₃ compared with either alone is unexpected and surprising.

Calcium oxide can be tolerated as may strontium oxide but for best properties these compounds are absent or at low levels. Zirconium oxide and iron oxide may be tolerated in small amounts. In general, the compositions of the present invention appear tolerant of additives although the amount acceptable to achieve desired properties will vary from additive to additive.

Table 3 shows that that the majority of fibres have a relatively low shrinkage at temperatures from 1000°C to 1300°C, with many having low shrinkage even as high as 1500°C.

Preferably the fibres of the above mentioned compositions have a melting point of greater than 1400°C. Still more preferably the fibres have a melting point of greater than 1600°C, more preferably greater than 1650°C, and still more preferably greater than 1700°C. (For glasses the melting point is defined as the temperature at which the composition has a viscosity of 10 Pa.s).

For ease of manufacture a composition having a low melting point [e.g. close to or at a eutectic] is to be preferred, whereas for best high temperature performance a composition having a high melting point is to be preferred. The applicants have found that compositions with about 35-40wt% silica [typically 47-52mol%] are easy to fiberise and form fibres that show low shrinkage at elevated temperatures. Such fibres with about 23-25wt% K₂O [typically 18-22mol%] are particularly easily formed. The best fibres in terms of ease of manufacture, and balance of solubility and refractoriness have a composition:-
- Al₂O₃: 39±5 wt%
- K₂O: 24±5 wt%
- SiO₂: 37±5 wt%
which approximates:-
- Al₂O₃: 30.7±5 mol%
- K₂O: 20.4±5 mol%
- SiO₂: 49±5.5 mol%
with an ever better range being:-
- Al₂O₃: 39±2 wt%
- K₂O: 24±2 wt%
- SiO₂: 37±2 wt%
which approximates
- Al₂O₃: 30.5±2 mol%
- K₂O: 20.3±2 mol%
- SiO₂: 49.1±2.25 mol%.
with another preferred range being:-
- Al₂O₃: 39±2 wt%
- K₂O: 27±2 wt%
- SiO₂: 34±2 wt%
which approximates
- Al₂O₃: 31.0±2 mol%
- K₂O: 23.2±2 mol%
- SiO₂: 45.8±2.3 mol%.

These ranges represent a balance in properties:-
- too much potassium and the resistivity lowers to a level that makes melting difficult
- too little potassium and poor high temperature shrinkage results
- too little potassium and solubility is low
- too much silica and glassy flow leading to poor shrinkage at 1000°C can result
- too little silica and poor shrinkage at high temperature results

[The behaviour with silica is contrary to the experience with alkaline earth silicate fibres where high silica contents achieve the best results both for high temperature shrinkage and glassy flow at 1000°C].

Tables 1 to 4 show bracketed in bold lines the compositions that fall within the narrow range described above.

Manufacture of fibres on a fibre development rig showed that fibres could be obtained with diameters useful in insulation applications [e.g. with 90% having a diameter of less than 5.6µm 50% having a diameter of less than 2.2µm and less than 10% having a diameter less than 0.9µm].

The solubility shown in Table 4 indicates that extremely high solubility may be achieved.

For applications where mechanical resilience is important the fibres may be subjected to a heat treatment. One such application is in pollution control devices such as catalytic converters, diesel particulate filters or traps, exhaust pipes and the like. The demands of such an environment are high and in particular the mats and end cones used need to have sufficient resilience to remain in place after exposure to temperatures of 800°C or more [typically 900°C may occur]. Amorphous fibres have been used to make such end cones but tend to lose resilience, and hence their holding pressure against the housing walls, if exposed to temperatures above about 900°C.

By resilience, in this context, is meant the ability of an article to recover its initial shape after deformation. This can be measured by simply looking to the size and shape of an article after deformation to see the extent to which it has returned from the deformed shape towards the undeformed shape. However, in the present context it is most usually measured by looking to the force resisting deformation, since this is an indicator of how well the end cones are likely to stay in place.

WO2004/064996 proposes the use of fibres that are at least partially crystalline or microcrystalline as these are stated to be resistant to shrinkage and more resilient than amorphous fibres, although WO2004/064996 recognises that such crystalline or microcrystalline fibres are more brittle than amorphous fibres. The resilient nature of crystalline or heat treated microcrystalline fibres is well known in the blanket art - see for example WO00/75496 and WO99/46028.

Vitreous fibres such as melt formed silicate fibres are subject of regulation in Europe, and different fibre classes have different hazard classifications and labelling requirements. Conventional vitreous aluminosilicate fibres require more stringent labelling concerning health hazards [as so-called category 2 carcinogens] than do alkaline earth silicate fibres which are exonerated from carcinogen classification.

Directive 97/69/EC which amends Annex 1 of Directive 67/548/EEC and classifies materials as to their potential carcinogenicity (the Hazardous Substances Directive) has two broad chemical categories for silicate fibres of less than 6µm diameter. These categories and their consequences are:-

| | |
|---|---|
| >18% w/w (CaO, MgO, Na₂O K₂O, BaO) | Category 3 - requires product warning label showing St. Andrews Cross and indicating potential harm if inhaled - such fibres may be exonerated from labelling requirements if they meet one or more defined tests of low biopersistence. |
| <18% w/w (CaO, MgO, Na₂O, K₂O, BaO) | Category 2 - requires product warning label showing skull and crossbones symbol and indicating potential carcinogen if inhaled - cannot be exonerated from labelling requirements |

It will be apparent that the presently claimed class of fibres cover compositions that could fall in Category 3 or Category 2, but advantageously, the amount of CaO + MgO + Na₂O + K₂O + BaO is greater than 18% by weight. The fibres of the most preferred manufacturing range mentioned above all meet this requirement as having a minimum K₂O content of 19wt% (24 minus 5wt%).

Additionally, in the EU, in European Commission Directive 2008/58/EC (amending directive 67/548/EEC on the classification, labelling of dangerous substances) it is indicated that borates could pose a potential toxin as potentially affecting fertility and development. A specific concentration limit of 3.1wt% for boron oxide was decided. Above this limit materials need to be labelled as toxic (with a skull and crossbones symbol included on the label), and the labelling must include the specified risk and safety phrases:-
- May impair fertility.
- May cause harm to the unborn child.
- Avoid exposure - obtain special instructions before use
- In case of accident or if you feel unwell seek medical advice immediately (show the label where possible)

Accordingly, the fibres of the present invention preferably contain less than 3.1wt% B₂O₃. Such a limit also has a practical effect, in that B₂O₃ tends to increase viscosity and above about 3wt% B₂O₃ coarse (>10µm diameter) fibres tend to be produced.

Subsequent to filing the priority application to this patent application, additional compositions have been tested and data for these compositions comparable to the data in Tables 1 to 4 are presented in Tables 5-6. The results obtained are consistent with the data previously presented.

It will be apparent from the above that the presently claimed invention provides improvement over the applicant's earlier application PCT/GB07/004509 (WO2008/065363) in providing:-
- a specific additive B₂O₃ that makes manufacture of fibre easier;
- a specific additional additive MgO that in combination with B₂O₃ improves the quality of the resultant fibre; and
- a specific preferred range of compositions that provide beneficial fibre properties and ease of manufacture;
and such fibres have been shown to resist temperatures of 1400°C [or even 1500°C].

The applicant reserves the right to claim in a divisional application the preferred compositional ranges in the absence of boron or magnesium, namely:-
Inorganic fibres in which the constituents SiO₂, Al₂O₃, and K₂O are present in the amounts:-
   - Al₂O₃: 30.7±5 mol%
   - K₂O: 20.4±5 mol%
   - SiO₂: 49±5.5 mol%
   in which SiO₂ + Al₂O₃ + K₂O >= 90 mol% and with the total constituents not exceeding 100mol%.
Such fibres in which the constituents SiO₂, Al₂O₃, and K₂O are present in the amounts:-
   - Al₂O₃: 30.5±2 mol%
   - K₂O: 20.3±2 mol%
   - SiO₂: 49.1±2.25 mol%.
   or
   - Al₂O₃: 31.0±2 mol%
   - K₂O: 23.2±2 mol%
   - SiO₂: 45.8±2.3 mol%.

| Table 1 - compositions in weight percent | | | | | | | | | | |
|---|---|---|---|---|---|---|---|---|---|---|
| | K₂O | Al₂O₃ | SiO₂ | B₂O₃ | MgO | CaO | SrO | Na₂O | ZrO₂ | Fe₂O₃ |
| KAS36 | 14.9 | 31.6 | 52.3 | | 0.0 | 0.0 | 0.0 | 0.0 | 0.0 | 0.0 |
| KAS35 | 15.1 | 34.9 | 48.5 | | 0.0 | 0.0 | 0.0 | 0.0 | 0.0 | 0.0 |
| KAS61 | 15.9 | 35.1 | 46.5 | | 0.1 | 0.0 | 0.0 | 0.2 | 0.0 | 0.1 |
| KMAS4 | 16.6 | 19.4 | 57.1 | | 5.4 | 0.1 | 0.0 | 0.1 | 0.0 | 0.0 |
| KAS33 | 17.4 | 36.7 | 45.4 | | 0.0 | 0.0 | 0.0 | 0.3 | 0.0 | 0.0 |
| KAS56 | 17.8 | 48.8 | 32.5 | | 0.1 | 0.2 | 0.0 | 0.2 | 0.0 | 0.0 |
| KAS66 | 18.0 | 45.3 | 35.2 | | 0.1 | 0.0 | 0.0 | 0.2 | 0.0 | 0.0 |
| KAS60 | 18.1 | 37.8 | 42.3 | | 0.0 | 0.0 | 0.0 | 0.7 | 0.0 | 0.0 |
| KAS4 | 18.5 | 22.0 | 58.7 | | 0.0 | 0.0 | 0.0 | 0.0 | 0.0 | 0.0 |
| KAS18 | 23.8 | 15.3 | 60.4 | | 0.0 | 0.0 | 0.0 | 0.0 | 0.0 | 0.0 |
| KMAS1 | 19.8 | 16.1 | 50.0 | | 13.9 | 0.0 | 0.0 | 0.0 | 0.0 | 0.0 |
| KMAS3 | 19.4 | 19.7 | 55.5 | | 5.1 | 0.0 | 0.0 | 0.0 | 0.0 | 0.0 |
| KAS40 | 21.4 | 20.3 | 57.2 | | 0.0 | 0.0 | 0.0 | 0.1 | 0.0 | 0.0 |
| KAS9 | 24.4 | 24.3 | 49.6 | | 0.0 | 0.0 | 0.0 | 0.0 | 0.0 | 0.0 |
| KAS47 | 25.1 | 24.8 | 49.4 | | 0.0 | 0.0 | 0.0 | 0.0 | 0.0 | 0.0 |
| KAS3 | 21.9 | 25.3 | 51.8 | | 0.1 | 0.3 | 0.0 | 0.0 | 0.0 | 0.0 |
| KAS 43-2 | 22.8 | 26.3 | 50.8 | | 0.0 | 0.0 | 0.0 | 0.1 | 0.1 | 0.0 |
| KAS13 | 22.9 | 26.5 | 49.7 | | 0.0 | 0.0 | 0.0 | 0.0 | 0.0 | 0.0 |
| KAS 47-2 | 23.7 | 26.6 | 47.3 | | 0.0 | 0.0 | 0.0 | 0.1 | 0.1 | 0.2 |
| KAS17 | 27.1 | 27.0 | 45.2 | | 0.0 | 0.0 | 0.0 | 0.0 | 0.0 | 0.0 |
| KCAS1 | 27.5 | 27.2 | 42.0 | | 0.1 | 2.3 | 0.0 | 0.1 | 0.0 | 0.0 |
| KAS45 | 28.0 | 27.5 | 44.5 | | 0.0 | 0.0 | 0.0 | 0.0 | 0.0 | 0.0 |
| KAS78 | 21.1 | 27.8 | 49.0 | | 1.0 | 0.0 | 0.0 | 0.2 | 0.1 | 0.1 |
| KAS 45-2 | 24.9 | 28.1 | 45.5 | | 0.0 | 0.0 | 0.0 | 0.1 | 0.1 | 0.2 |
| KAS77 | 22.1 | 28.2 | 49.1 | | 0.0 | 0.9 | 0.0 | 0.2 | 0.1 | 0.1 |
| KAS 67-1 | 19.7 | 28.2 | 52.1 | | 0.1 | 0.0 | 0.0 | 0.1 | 0.1 | 0.0 |
| KAS46 | 27.7 | 28.3 | 43.2 | | 0.0 | 0.0 | 0.0 | 0.0 | 0.0 | 0.0 |
| KAS67-2 | 22.2 | 28.4 | 47.5 | | 0.0 | 0.0 | 0.0 | 0.1 | 0.1 | 0.2 |
| KNAS1 | 26.2 | 28.4 | 37.9 | | 0.0 | 0.0 | 0.0 | 6.7 | 0.0 | 0.0 |
| KAS82-2 | 20.4 | 28.5 | 50.4 | | 0.1 | 0.1 | 0.4 | 0.1 | 0.1 | 0.1 |
| KAS81 | 21.2 | 28.7 | 49.4 | | 0.1 | 0.5 | 0.0 | 0.2 | 0.1 | 0.0 |
| KACaSrS02 | 24.6 | 28.9 | 39.0 | | 0.1 | 2.4 | 2.2 | 0.2 | 0.0 | 0.0 |
| KAS76 | 21.0 | 29.0 | 48.6 | | 0.0 | 0.0 | 0.8 | 0.2 | 0.1 | 0.0 |
| KAS83 | 20.7 | 29.0 | 48.2 | | 0.1 | 0.5 | 0.8 | 0.2 | 0.1 | 0.0 |
| KAS79 | 22.5 | 29.2 | 48.1 | | 0.0 | 0.0 | 0.0 | 0.8 | 0.1 | 0.1 |
| KNAS2 | 24.1 | 29.2 | 39.3 | | 0.0 | 0.0 | 0.0 | 6.8 | 0.0 | 0.0 |
| KAS 76-3 | 21.2 | 29.2 | 48.3 | | 0.1 | 0.0 | 0.9 | 0.3 | 0.1 | 0.0 |
| KAS67 | 21.6 | 29.3 | 49.4 | | 0.0 | 0.3 | 0.0 | 0.1 | 0.1 | 0.0 |
| KAS80 | 22.9 | 29.7 | 47.3 | 0.7 | 0.0 | 0.0 | 0.0 | 0.2 | 0.1 | 0.0 |
| KAS82 | 20.7 | 30.0 | 48.4 | | 0.2 | 0.0 | 0.4 | 0.2 | 0.1 | 0.0 |
| KAS76-2 | 20.7 | 30.1 | 47.1 | | 0.3 | 0.1 | 0.9 | 0.2 | 0.1 | 0.0 |
| KMAS6 | 24.3 | 30.1 | 40.7 | | 2.8 | 0.0 | 0.0 | 0.2 | 0.0 | 0.0 |
| KAS84 | 21.2 | 30.2 | 47.1 | | 0.1 | 0.5 | 0.5 | 0.2 | 0.1 | 0.0 |
| KAS86 | 20.7 | 30.2 | 46.8 | | 0.1 | 1.0 | 0.9 | 0.2 | 0.1 | 0.1 |
| KAS85 | 21.3 | 30.2 | 47.0 | | 0.1 | 1.0 | 0.5 | 0.2 | 0.1 | 0.1 |
| KSAS1 | 24.8 | 30.3 | 41.9 | | 0.0 | 0.0 | 2.4 | 0.2 | 0.0 | 0.0 |
| KAS77-2 | 21.1 | 30.7 | 47.0 | | 0.1 | 1.0 | 0.0 | 0.2 | 0.1 | 0.0 |
| KAS 77-3 | 20.9 | 30.8 | 47.2 | | 0.1 | 0.9 | 0.0 | 0.2 | 0.1 | 0.0 |
| KAMgSrS02 | 24.2 | 31.1 | 39.6 | | 2.5 | 0.1 | 2.3 | 0.2 | 0.0 | 0.0 |
| KAS34 | 20.7 | 31.1 | 46.2 | | 0.0 | 0.0 | 0.0 | 0.0 | 0.0 | 0.0 |
| KAS44 | 28.5 | 31.3 | 40.7 | | 0.0 | 0.0 | 0.0 | 0.0 | 0.0 | 0.0 |
| KAS 44-2 | 28.1 | 32.0 | 39.9 | | 0.0 | 0.0 | 0.0 | 0.1 | 0.1 | 0.0 |
| KAS32 | 25.3 | 32.3 | 41.4 | | 0.0 | 0.0 | 0.0 | 0.0 | 0.0 | 0.0 |
| Kas 132 | 25.7 | 32.5 | 37.6 | | 2.9 | 0.2 | 0.0 | 0.2 | 0.0 | 0.0 |
| Kas 117 | 24.6 | 32.6 | 40.4 | | 1.3 | 0.0 | 0.8 | 0.2 | 0.0 | 0.0 |
| Kas 118 | 25.1 | 33.2 | 39.1 | | 0.1 | 0.9 | 0.8 | 0.2 | 0.0 | 0.0 |
| Kas 120 | 24.8 | 33.6 | 40.2 | | 0.1 | 0.9 | 0.0 | 0.2 | 0.0 | 0.0 |
| Kas 135 | 24.4 | 33.7 | 36.6 | | 2.6 | 0.0 | 1.7 | 0.2 | 0.0 | 0.0 |
| KAS65 | 24.1 | 43.0 | 31.5 | | 0.1 | 0.0 | 0.0 | 0.2 | 0.0 | 0.1 |
| Kas 136 | 26.0 | 38.0 | 33.2 | 0.5 | 1.2 | 0.1 | 0.0 | 0.3 | 0.0 | 0.0 |
| KAS55 | 25.3 | 39.9 | 33.3 | | 0.0 | 0.0 | 0.0 | 0.2 | 0.0 | 0.0 |
| KAS54 | 22.5 | 42.9 | 33.9 | | 0.0 | 0.0 | 0.0 | 0.1 | 0.0 | 0.0 |
| Kas 130 | 23.2 | 38.3 | 34.0 | 1.3 | 2.3 | 0.0 | 0.0 | 0.2 | 0.0 | 0.0 |
| Kas 131 | 23.8 | 37.5 | 34.6 | 1.2 | 0.1 | 0.0 | 1.8 | 0.2 | 0.0 | 0.0 |
| Kas 91 | 25.2 | 40.0 | 34.9 | | 0.1 | 0.0 | 0.0 | 0.2 | 0.0 | 0.0 |
| Kas 133 | 24.1 | 38.5 | 35.1 | 1.2 | 0.1 | 0.0 | 0.0 | 0.2 | 0.0 | 0.0 |
| Kas 125 | 24.7 | 38.6 | 35.6 | 0.6 | 0.1 | 0.0 | 0.9 | 0.2 | 0.0 | 0.0 |
| Kas 142 | 28.7 | 34.3 | 35.8 | | 0.1 | 0.1 | 0.0 | 0.2 | 0.0 | 0.0 |
| KAS30 | 25.6 | 36.3 | 35.9 | | 0.0 | 0.0 | 0.0 | 0.0 | 0.0 | 0.0 |
| Kas 124 | 24.1 | 37.6 | 36.1 | 0.6 | 1.2 | 0.1 | 0.0 | 0.2 | 0.0 | 0.0 |
| Kas 127 | 25.4 | 38.3 | 36.2 | 0.6 | 0.1 | 0.0 | 0.0 | 0.2 | 0.0 | 0.0 |
| Kas 134 | 26.4 | 34.6 | 36.3 | | 0.1 | 0.0 | 1.7 | 0.2 | 0.0 | 0.0 |
| Kas 90 | 24.4 | 38.7 | 36.5 | | 0.1 | 0.0 | 0.0 | 0.2 | 0.0 | 0.0 |
| Kas 114 | 23.2 | 38.2 | 36.7 | 0.6 | 0.1 | 0.0 | 0.9 | 0.2 | 0.0 | 0.0 |
| KSAS2 | 21.4 | 37.6 | 37.1 | | 0.1 | 0.1 | 2.9 | 0.2 | 0.0 | 0.0 |
| Kas 109 | 23.4 | 38.3 | 37.3 | 1.4 | 0.1 | 0.0 | 0.0 | 0.2 | 0.0 | 0.0 |
| Kas 126 | 26.0 | 35.0 | 37.5 | | 1.3 | 0.0 | 0.0 | 0.2 | 0.0 | 0.0 |
| Kas 104 | 23.4 | 38.1 | 37.5 | 0.4 | 0.6 | 0.0 | 0.0 | 0.2 | 0.0 | 0.0 |
| KAS31 | 20.6 | 40.1 | 37.5 | | 0.0 | 0.0 | 0.0 | 0.0 | 0.0 | 0.0 |
| Kas 112 | 24.2 | 36.5 | 37.6 | 0.7 | 1.2 | 0.0 | 0.0 | 0.2 | 0.0 | 0.0 |
| Kas 128 | 26.0 | 35.5 | 37.7 | | 0.1 | 0.0 | 0.8 | 0.2 | 0.0 | 0.0 |
| Kas 106 | 23.4 | 37.9 | 37.8 | 0.4 | 0.1 | 0.0 | 0.5 | 0.2 | 0.0 | 0.0 |
| Kas 105 | 23.5 | 37.7 | 38.0 | 0.4 | 0.1 | 0.5 | 0.0 | 0.2 | 0.0 | 0.0 |
| Kas 92 | 24.2 | 37.1 | 38.3 | | 0.1 | 0.0 | 0.4 | 0.2 | 0.0 | 0.0 |
| Kas 121 | 23.2 | 35.8 | 38.4 | | 1.2 | 1.0 | 0.0 | 0.2 | 0.0 | 0.0 |
| Kas 116 | 24.1 | 36.0 | 38.5 | | 0.1 | 0.0 | 0.8 | 0.2 | 0.0 | 0.0 |
| Kas 94 | 23.9 | 36.7 | 38.5 | | 0.1 | 0.5 | 0.4 | 0.2 | 0.0 | 0.0 |
| Kas 102 | 25.0 | 35.7 | 38.7 | 0.6 | 0.1 | 0.0 | 0.0 | 0.2 | 0.0 | 0.0 |
| Kas 93 | 23.7 | 36.4 | 38.8 | | 0.6 | 0.0 | 0.4 | 0.2 | 0.0 | 0.0 |
| Kas 108 | 24.5 | 35.6 | 38.9 | 0.9 | 0.1 | 0.0 | 0.0 | 0.2 | 0.0 | 0.0 |
| Kas 103 | 23.9 | 37.3 | 39.0 | 0.3 | 0.1 | 0.0 | 0.0 | 0.2 | 0.0 | 0.0 |
| Kas 96 | 23.9 | 36.8 | 39.1 | | 0.1 | 0.5 | 0.0 | 0.2 | 0.0 | 0.0 |
| Kas 113 | 25.1 | 34.6 | 39.2 | 0.6 | 0.1 | 0.9 | 0.0 | 0.2 | 0.0 | 0.0 |
| Kas 99 | 22.4 | 37.9 | 39.4 | | 0.6 | 0.0 | 0.0 | 0.2 | 0.0 | 0.0 |
| Kas 97 | 23.6 | 34.3 | 40.3 | | 0.7 | 0.5 | 0.0 | 0.2 | 0.0 | 0.0 |
| Kas 89 | 23.4 | 36.7 | 40.4 | | 0.1 | 0.0 | 0.0 | 0.2 | 0.0 | 0.0 |
| KCAS2 | 20.4 | 34.0 | 40.9 | | 0.1 | 2.7 | 0.0 | 0.1 | 0.0 | 0.0 |
| Kas 88 | 24.5 | 34.2 | 41.7 | | 0.1 | 0.0 | 0.0 | 0.2 | 0.0 | 0.0 |
| Kas 87 | 23.2 | 34.1 | 43.2 | | 0.1 | 0.0 | 0.0 | 0.2 | 0.0 | 0.0 |
| KAS 33-2 | 19.5 | 36.2 | 44.0 | | 0.1 | 0.0 | 0.0 | 0.2 | 0.1 | 0.0 |
| KAS59 | 20.0 | 45.3 | 32.5 | | 0.1 | 0.3 | 0.0 | 0.2 | 0.0 | 0.1 |
| KAS63 | 28.5 | 50.6 | 21.4 | | 0.1 | 0.0 | 0.0 | 0.2 | 0.0 | 0.0 |
| KAS64 | 24.2 | 52.9 | 22.7 | | 0.1 | 0.0 | 0.0 | 0.2 | 0.0 | 0.0 |
| KAS63 | 24.6 | 55.0 | 17.9 | | 0.1 | 0.0 | 0.0 | 0.2 | 0.0 | 0.0 |
| KAS71 | 28.7 | 55.9 | 16.1 | | 0.0 | 0.0 | 0.0 | 0.3 | 0.1 | 0.0 |
| KAS73 | 23.6 | 58.2 | 17.8 | | 0.0 | 0.0 | 0.0 | 0.2 | 0.1 | 0.0 |
| KAS72 | 28.4 | 58.8 | 12.4 | | 0.0 | 0.0 | 0.0 | 0.3 | 0.1 | 0.0 |
| KAS74 | 24.1 | 61.7 | 13.4 | | 0.0 | 0.0 | 0.0 | 0.3 | 0.1 | 0.0 |
| Kas 143 | 29.3 | 33.5 | 35.7 | | 0.1 | 0.1 | 0.0 | 0.2 | 0.0 | 0.0 |
| KAS53 | 29.8 | 42.6 | 26.7 | | 0.0 | 0.0 | 0.0 | 0.1 | 0.0 | 0.0 |
| KAS14 | 29.8 | 25.7 | 42.8 | | 0.0 | 0.0 | 0.0 | 0.0 | 0.0 | 0.0 |
| KAS12 | 30.4 | 17.7 | 51.4 | | 0.0 | 0.0 | 0.0 | 0.0 | 0.0 | 0.0 |
| KAS48 | 30.5 | 32.8 | 35.9 | | 0.1 | 0.0 | 0.0 | 0.1 | 0.0 | 0.0 |
| KAS70 | 30.7 | 58.9 | 11.7 | | 0.0 | 0.0 | 0.0 | 0.2 | 0.1 | 0.0 |
| KAS69 | 31.7 | 53.5 | 15.6 | | 0.0 | 0.0 | 0.0 | 0.2 | 0.1 | 0.0 |
| KAS37 | 31.8 | 29.4 | 39.2 | | 0.0 | 0.0 | 0.0 | 0.0 | 0.0 | 0.0 |
| KAS62 | 32.0 | 45.8 | 21.1 | | 0.1 | 0.0 | 0.0 | 0.2 | 0.0 | 0.1 |
| KAS68 | 32.3 | 54.9 | 13.2 | | 0.0 | 0.2 | 0.0 | 0.2 | 0.1 | 0.0 |
| KAS28 | 32.5 | 34.6 | 31.1 | | 0.0 | 0.0 | 0.0 | 0.0 | 0.0 | 0.0 |
| KAS5 | 33.0 | 18.9 | 45.7 | | 0.0 | 0.0 | 0.0 | 0.0 | 0.0 | 0.0 |
| KAS75 | 33.1 | 52.4 | 16.3 | | 0.0 | 0.0 | 0.0 | 0.3 | 0.1 | 0.0 |
| KAS51 | 33.7 | 41.7 | 23.4 | | 0.1 | 0.0 | 0.0 | 0.1 | 0.0 | 0.0 |
| KAS41 | 33.8 | 37.1 | 27.5 | | 0.0 | 0.0 | 0.0 | 0.1 | 0.0 | 0.0 |
| KAS2 | 34.0 | 29.0 | 35.7 | | 0.0 | 0.0 | 0.0 | 0.0 | 0.0 | 0.0 |
| KAS50 | 34.4 | 35.5 | 29.6 | | 0.0 | 0.0 | 0.0 | 0.1 | 0.0 | 0.0 |
| KAS29 | 34.5 | 28.8 | 36.7 | | 0.0 | 0.0 | 0.0 | 0.0 | 0.0 | 0.0 |
| KAS10 | 35.5 | 24.5 | 39.3 | | 0.0 | 0.0 | 0.0 | 0.0 | 0.0 | 0.0 |
| KAS25 | 35.6 | 35.9 | 26.3 | | 0.0 | 0.0 | 0.0 | 0.0 | 0.0 | 0.0 |
| KAS27 | 37.1 | 31.3 | 31.3 | | 0.0 | 0.0 | 0.0 | 0.2 | 0.0 | 0.0 |
| KAS11 | 37.1 | 22.7 | 37.9 | | 0.0 | 0.0 | 0.0 | 0.0 | 0.0 | 0.0 |
| KAS15 | 37.4 | 26.8 | 33.8 | | 0.0 | 0.0 | 0.0 | 0.0 | 0.0 | 0.0 |
| KAS52 | 43.2 | 26.0 | 31.3 | | 0.0 | 0.0 | 0.0 | 0.1 | 0.0 | 0.0 |

| Table 2 - compositions in mol% | | | | | | | | | | |
|---|---|---|---|---|---|---|---|---|---|---|
| | K₂O | Al₂O₃ | SiO₂ | B₂O₃ | MgO | CaO | SrO | Na₂O | ZrO₂ | Fe₂O₃ |
| KAS36 | 11.8% | 23.2% | 65.0% | 0.0% | 0.0% | 0.0% | 0.0% | 0.0% | 0.0% | 0.0% |
| KAS35 | 12.2% | 26.1% | 61.6% | 0.0% | 0.0% | 0.0% | 0.0% | 0.0% | 0.0% | 0.0% |
| KAS61 | 13.1% | 26.6% | 59.9% | 0.0% | 0.1% | 0.0% | 0.0% | 0.2% | 0.0% | 0.0% |
| KMAS4 | 12.1% | 13.1% | 65.4% | 0.0% | 9.2% | 0.1% | 0.0% | 0.1% | 0.0% | 0.0% |
| KAS33 | 14.2% | 27.6% | 57.9% | 0.0% | 0.0% | 0.0% | 0.0% | 0.3% | 0.0% | 0.0% |
| KAS56 | 15.5% | 39.3% | 44.4% | 0.0% | 0.2% | 0.3% | 0.0% | 0.3% | 0.0% | 0.0% |
| KAS66 | 15.6% | 36.2% | 47.8% | 0.0% | 0.2% | 0.0% | 0.0% | 0.3% | 0.0% | 0.0% |
| KAS60 | 15.0% | 29.0% | 55.1% | 0.0% | 0.0% | 0.0% | 0.0% | 0.9% | 0.0% | 0.0% |
| KAS4 | 14.1% | 15.5% | 70.3% | 0.0% | 0.0% | 0.0% | 0.0% | 0.0% | 0.0% | 0.0% |
| KAS18 | 17.9% | 10.7% | 71.4% | 0.0% | 0.0% | 0.0% | 0.0% | 0.0% | 0.0% | 0.0% |
| KMAS1 | 13.6% | 10.2% | 53.9% | 0.0% | 22.3% | 0.0% | 0.0% | 0.0% | 0.0% | 0.0% |
| KMAS3 | 14.2% | 13.3% | 63.7% | 0.0% | 8.7% | 0.0% | 0.0% | 0.0% | 0.0% | 0.0% |
| KAS40 | 16.5% | 14.4% | 69.0% | 0.0% | 0.0% | 0.0% | 0.0% | 0.1% | 0.0% | 0.0% |
| KAS9 | 19.6% | 18.0% | 62.4% | 0.0% | 0.0% | 0.0% | 0.0% | 0.0% | 0.0% | 0.0% |
| KAS47 | 20.0% | 18.3% | 61.7% | 0.0% | 0.0% | 0.0% | 0.0% | 0.0% | 0.0% | 0.0% |
| KAS3 | 17.2% | 18.4% | 63.8% | 0.0% | 0.2% | 0.4% | 0.0% | 0.0% | 0.0% | 0.0% |
| KAS 43-2 | 17.9% | 19.1% | 62.7% | 0.0% | 0.1% | 0.0% | 0.0% | 0.1% | 0.0% | 0.0% |
| KAS13 | 18.3% | 19.5% | 62.2% | 0.0% | 0.0% | 0.0% | 0.0% | 0.0% | 0.0% | 0.0% |
| KAS 47-2 | 19.3% | 20.0% | 60.4% | 0.0% | 0.0% | 0.0% | 0.0% | 0.1% | 0.1% | 0.1% |
| KAS17 | 22.0% | 20.3% | 57.7% | 0.0% | 0.0% | 0.0% | 0.0% | 0.0% | 0.0% | 0.0% |
| KCAS1 | 22.4% | 20.5% | 53.7% | 0.0% | 0.2% | 3.1% | 0.0% | 0.1% | 0.0% | 0.0% |
| KAS45 | 22.7% | 20.6% | 56.6% | 0.0% | 0.0% | 0.0% | 0.0% | 0.0% | 0.0% | 0.0% |
| KAS78 | 16.7% | 20.3% | 60.8% | 0.0% | 1.8% | 0.0% | 0.0% | 0.2% | 0.1% | 0.0% |
| KAS 45-2 | 20.3% | 21.2% | 58.2% | 0.0% | 0.0% | 0.0% | 0.0% | 0.1% | 0.1% | 0.1% |
| KAS77 | 17.4% | 20.5% | 60.6% | 0.0% | 0.0% | 1.2% | 0.0% | 0.2% | 0.1% | 0.0% |
| KAS 67-1 | 15.4% | 20.4% | 63.9% | 0.0% | 0.2% | 0.0% | 0.0% | 0.2% | 0.0% | 0.0% |
| KAS46 | 22.8% | 21.5% | 55.7% | 0.0% | 0.0% | 0.0% | 0.0% | 0.0% | 0.0% | 0.0% |
| KAS67-2 | 18.0% | 21.3% | 60.4% | 0.0% | 0.0% | 0.0% | 0.0% | 0.1% | 0.1% | 0.1% |
| KNAS1 | 21.5% | 21.5% | 48.7% | 0.0% | 0.0% | 0.0% | 0.0% | 8.3% | 0.0% | 0.0% |
| KAS82-2 | 16.1% | 20.8% | 62.3% | 0.0% | 0.2% | 0.1% | 0.3% | 0.1% | 0.1% | 0.0% |
| KAS81 | 16.7% | 20.9% | 61.2% | 0.0% | 0.2% | 0.7% | 0.0% | 0.2% | 0.1% | 0.0% |
| KACaSrS02 | 20.7% | 22.4% | 51.4% | 0.0% | 0.2% | 3.4% | 1.7% | 0.3% | 0.0% | 0.0% |
| KAS76 | 16.8% | 21.4% | 60.9% | 0.0% | 0.0% | 0.0% | 0.6% | 0.2% | 0.1% | 0.0% |
| KAS83 | 16.5% | 21.4% | 60.3% | 0.0% | 0.2% | 0.7% | 0.6% | 0.2% | 0.1% | 0.0% |
| KAS79 | 17.8% | 21.4% | 59.7% | 0.0% | 0.0% | 0.0% | 0.0% | 1.0% | 0.1% | 0.0% |
| KNAS2 | 19.6% | 21.9% | 50.1% | 0.0% | 0.0% | 0.0% | 0.0% | 8.4% | 0.0% | 0.0% |
| KAS 76-3 | 16.9% | 21.5% | 60.3% | 0.0% | 0.2% | 0.0% | 0.7% | 0.4% | 0.1% | 0.0% |
| KAS67 | 17.0% | 21.3% | 61.1% | 0.0% | 0.0% | 0.4% | 0.0% | 0.1% | 0.1% | 0.0% |
| KAS80 | 18.2% | 21.8% | 58.9% | 0.8% | 0.0% | 0.0% | 0.0% | 0.2% | 0.1% | 0.0% |
| KAS82 | 16.5% | 22.1% | 60.5% | 0.0% | 0.4% | 0.0% | 0.3% | 0.2% | 0.1% | 0.0% |
| KAS76-2 | 16.6% | 22.4% | 59.4% | 0.0% | 0.6% | 0.1% | 0.7% | 0.2% | 0.1% | 0.0% |
| KMAS6 | 19.8% | 22.7% | 52.0% | 0.0% | 5.3% | 0.0% | 0.0% | 0.2% | 0.0% | 0.0% |
| KAS84 | 17.0% | 22.3% | 59.1% | 0.0% | 0.2% | 0.7% | 0.4% | 0.2% | 0.1% | 0.0% |
| KAS86 | 16.5% | 22.3% | 58.6% | 0.0% | 0.2% | 1.3% | 0.7% | 0.2% | 0.1% | 0.0% |
| KAS85 | 16.9% | 22.2% | 58.6% | 0.0% | 0.2% | 1.3% | 0.4% | 0.2% | 0.1% | 0.0% |
| KSAS1 | 20.5% | 23.1% | 54.3% | 0.0% | 0.0% | 0.0% | 1.8% | 0.3% | 0.0% | 0.0% |
| KAS77-2 | 16.8% | 22.6% | 58.7% | 0.0% | 0.2% | 1.3% | 0.0% | 0.2% | 0.1% | 0.0% |
| KAS 77-3 | 16.7% | 22.7% | 59.1% | 0.0% | 0.1% | 1.2% | 0.0% | 0.2% | 0.0% | 0.0% |
| KAMgSrS02 | 19.6% | 23.3% | 50.3% | 0.0% | 4.8% | 0.1% | 1.7% | 0.2% | 0.0% | 0.0% |
| KAS34 | 17.0% | 23.6% | 59.4% | 0.0% | 0.0% | 0.0% | 0.0% | 0.0% | 0.0% | 0.0% |
| KAS44 | 23.5% | 23.9% | 52.6% | 0.0% | 0.0% | 0.0% | 0.0% | 0.0% | 0.0% | 0.0% |
| KAS 44-2 | 23.3% | 24.5% | 51.9% | 0.0% | 0.1% | 0.0% | 0.0% | 0.2% | 0.1% | 0.0% |
| KAS32 | 21.1% | 24.9% | 54.1% | 0.0% | 0.0% | 0.0% | 0.0% | 0.0% | 0.0% | 0.0% |
| Kas 132 | 21.0% | 24.6% | 48.3% | 0.0% | 5.5% | 0.3% | 0.0% | 0.3% | 0.0% | 0.0% |
| Kas 117 | 20.1% | 24.7% | 51.9% | 0.0% | 2.5% | 0.0% | 0.6% | 0.2% | 0.0% | 0.0% |
| Kas 118 | 20.9% | 25.6% | 51.1% | 0.0% | 0.2% | 1.3% | 0.6% | 0.3% | 0.0% | 0.0% |
| Kas 120 | 20.5% | 25.7% | 52.1% | 0.0% | 0.2% | 1.3% | 0.0% | 0.3% | 0.0% | 0.0% |
| Kas 135 | 20.2% | 25.8% | 47.4% | 0.0% | 5.0% | 0.1% | 1.3% | 0.3% | 0.0% | 0.0% |
| KAS65 | 21.2% | 35.0% | 43.5% | 0.0% | 0.1% | 0.0% | 0.0% | 0.3% | 0.0% | 0.1% |
| Kas 136 | 22.2% | 29.9% | 44.5% | 0.5% | 2.3% | 0.2% | 0.0% | 0.3% | 0.0% | 0.0% |
| KAS55 | 22.1% | 32.1% | 45.5% | 0.0% | 0.0% | 0.0% | 0.0% | 0.3% | 0.0% | 0.0% |
| KAS54 | 19.5% | 34.3% | 46.0% | 0.0% | 0.0% | 0.0% | 0.0% | 0.1% | 0.0% | 0.0% |
| Kas 130 | 19.5% | 29.6% | 44.6% | 1.5% | 4.5% | 0.0% | 0.0% | 0.3% | 0.0% | 0.0% |
| Kas 131 | 20.5% | 29.7% | 46.6% | 1.3% | 0.1% | 0.0% | 1.4% | 0.3% | 0.0% | 0.0% |
| Kas 91 | 21.5% | 31.5% | 46.6% | 0.0% | 0.2% | 0.0% | 0.0% | 0.3% | 0.0% | 0.0% |
| Kas 133 | 20.6% | 30.4% | 47.1% | 1.4% | 0.2% | 0.0% | 0.0% | 0.3% | 0.0% | 0.0% |
| Kas 125 | 20.9% | 30.1% | 47.2% | 0.7% | 0.2% | 0.0% | 0.7% | 0.3% | 0.0% | 0.0% |
| Kas 142 | 24.5% | 27.0% | 47.9% | 0.0% | 0.1% | 0.1% | 0.0% | 0.3% | 0.0% | 0.0% |
| KAS30 | 22.2% | 29.1% | 48.8% | 0.0% | 0.0% | 0.0% | 0.0% | 0.0% | 0.0% | 0.0% |
| Kas 124 | 20.2% | 29.1% | 47.4% | 0.7% | 2.3% | 0.1% | 0.0% | 0.3% | 0.0% | 0.0% |
| Kas 127 | 21.3% | 29.8% | 47.8% | 0.7% | 0.1% | 0.0% | 0.0% | 0.3% | 0.0% | 0.0% |
| Kas 134 | 22.5% | 27.2% | 48.5% | 0.0% | 0.2% | 0.0% | 1.3% | 0.3% | 0.0% | 0.0% |
| Kas 90 | 20.7% | 30.3% | 48.5% | 0.0% | 0.2% | 0.0% | 0.0% | 0.3% | 0.0% | 0.0% |
| Kas 114 | 19.6% | 29.9% | 48.7% | 0.7% | 0.2% | 0.0% | 0.7% | 0.3% | 0.0% | 0.0% |
| KSAS2 | 18.2% | 29.5% | 49.4% | 0.0% | 0.2% | 0.1% | 2.2% | 0.3% | 0.0% | 0.0% |
| Kas 109 | 19.6% | 29.6% | 48.9% | 1.6% | 0.1% | 0.0% | 0.0% | 0.2% | 0.0% | 0.0% |
| Kas 126 | 21.6% | 26.8% | 48.8% | 0.0% | 2.5% | 0.0% | 0.0% | 0.3% | 0.0% | 0.0% |
| Kas 104 | 19.6% | 29.4% | 49.1% | 0.4% | 1.2% | 0.0% | 0.0% | 0.3% | 0.0% | 0.0% |
| KAS31 | 17.7% | 31.8% | 50.5% | 0.0% | 0.0% | 0.0% | 0.0% | 0.0% | 0.0% | 0.0% |
| Kas 112 | 20.0% | 27.9% | 48.7% | 0.8% | 2.3% | 0.0% | 0.0% | 0.3% | 0.0% | 0.0% |
| Kas 128 | 21.8% | 27.5% | 49.6% | 0.0% | 0.1% | 0.0% | 0.6% | 0.3% | 0.0% | 0.0% |
| Kas 106 | 19.6% | 29.4% | 49.7% | 0.4% | 0.2% | 0.0% | 0.4% | 0.3% | 0.0% | 0.0% |
| Kas 105 | 19.6% | 29.1% | 49.7% | 0.4% | 0.2% | 0.7% | 0.0% | 0.3% | 0.0% | 0.0% |
| Kas 92 | 20.3% | 28.7% | 50.3% | 0.0% | 0.2% | 0.0% | 0.3% | 0.3% | 0.0% | 0.0% |
| Kas 121 | 19.1% | 27.3% | 49.6% | 0.0% | 2.3% | 1.4% | 0.0% | 0.3% | 0.0% | 0.0% |
| Kas 116 | 20.3% | 28.0% | 50.7% | 0.0% | 0.2% | 0.0% | 0.6% | 0.3% | 0.0% | 0.0% |
| Kas 94 | 19.9% | 28.3% | 50.3% | 0.0% | 0.2% | 0.7% | 0.3% | 0.3% | 0.0% | 0.0% |
| Kas 102 | 20.8% | 27.5% | 50.6% | 0.7% | 0.2% | 0.0% | 0.0% | 0.3% | 0.0% | 0.0% |
| Kas 93 | 19.7% | 28.0% | 50.6% | 0.0% | 1.2% | 0.0% | 0.3% | 0.3% | 0.0% | 0.0% |
| Kas 108 | 20.4% | 27.4% | 50.8% | 1.0% | 0.1% | 0.0% | 0.0% | 0.2% | 0.0% | 0.0% |
| Kas 103 | 19.8% | 28.6% | 50.8% | 0.3% | 0.2% | 0.0% | 0.0% | 0.3% | 0.0% | 0.0% |
| Kas 96 | 19.8% | 28.2% | 50.8% | 0.0% | 0.2% | 0.7% | 0.0% | 0.3% | 0.0% | 0.0% |
| Kas 113 | 20.7% | 26.3% | 50.6% | 0.7% | 0.2% | 1.2% | 0.0% | 0.3% | 0.0% | 0.0% |
| Kas 99 | 18.5% | 29.0% | 51.1% | 0.0% | 1.2% | 0.0% | 0.0% | 0.3% | 0.0% | 0.0% |
| Kas 97 | 19.5% | 26.1% | 52.1% | 0.0% | 1.3% | 0.7% | 0.0% | 0.3% | 0.0% | 0.0% |
| Kas 89 | 19.3% | 28.0% | 52.3% | 0.0% | 0.2% | 0.0% | 0.0% | 0.3% | 0.0% | 0.0% |
| KCAS2 | 16.9% | 26.0% | 53.1% | 0.0% | 0.2% | 3.8% | 0.0% | 0.1% | 0.0% | 0.0% |
| Kas 88 | 20.1% | 25.9% | 53.6% | 0.0% | 0.2% | 0.0% | 0.0% | 0.2% | 0.0% | 0.0% |
| Kas 87 | 18.9% | 25.6% | 55.1% | 0.0% | 0.2% | 0.0% | 0.0% | 0.2% | 0.0% | 0.0% |
| KAS 33-2 | 15.9% | 27.3% | 56.3% | 0.0% | 0.2% | 0.0% | 0.0% | 0.2% | 0.0% | 0.0% |
| KAS59 | 17.6% | 36.7% | 44.7% | 0.0% | 0.2% | 0.4% | 0.0% | 0.3% | 0.0% | 0.1% |
| KAS63 | 26.1% | 42.8% | 30.7% | 0.0% | 0.2% | 0.0% | 0.0% | 0.3% | 0.0% | 0.0% |
| KAS64 | 22.2% | 44.8% | 32.6% | 0.0% | 0.2% | 0.0% | 0.0% | 0.3% | 0.0% | 0.0% |
| KAS63 | 23.7% | 48.9% | 27.0% | 0.0% | 0.1% | 0.0% | 0.0% | 0.3% | 0.0% | 0.0% |
| KAS71 | 27.0% | 48.7% | 23.8% | 0.0% | 0.0% | 0.0% | 0.0% | 0.4% | 0.1% | 0.0% |
| KAS73 | 22.3% | 50.9% | 26.4% | 0.0% | 0.0% | 0.0% | 0.0% | 0.3% | 0.1% | 0.0% |
| KAS72 | 27.7% | 52.9% | 18.9% | 0.0% | 0.0% | 0.0% | 0.0% | 0.4% | 0.1% | 0.0% |
| KAS74 | 23.5% | 55.5% | 20.5% | 0.0% | 0.0% | 0.0% | 0.0% | 0.4% | 0.1% | 0.0% |
| Kas 143 | 25.1% | 26.5% | 47.9% | 0.0% | 0.2% | 0.1% | 0.0% | 0.3% | 0.0% | 0.0% |
| KAS53 | 26.8% | 35.4% | 37.7% | 0.0% | 0.0% | 0.0% | 0.0% | 0.1% | 0.0% | 0.0% |
| KAS 14 | 24.7% | 19.7% | 55.6% | 0.0% | 0.0% | 0.0% | 0.0% | 0.0% | 0.0% | 0.0% |
| KAS 12 | 23.9% | 12.8% | 63.3% | 0.0% | 0.0% | 0.0% | 0.0% | 0.0% | 0.0% | 0.0% |
| KAS48 | 26.0% | 25.8% | 47.9% | 0.0% | 0.2% | 0.0% | 0.0% | 0.1% | 0.0% | 0.0% |
| KAS70 | 29.6% | 52.4% | 17.7% | 0.0% | 0.0% | 0.0% | 0.0% | 0.3% | 0.1% | 0.0% |
| KAS69 | 29.9% | 46.6% | 23.1% | 0.0% | 0.0% | 0.0% | 0.0% | 0.3% | 0.1% | 0.0% |
| KAS37 | 26.4% | 22.6% | 51.0% | 0.0% | 0.0% | 0.0% | 0.0% | 0.0% | 0.0% | 0.0% |
| KAS62 | 29.6% | 39.2% | 30.7% | 0.0% | 0.1% | 0.0% | 0.0% | 0.3% | 0.0% | 0.1% |
| KAS68 | 30.9% | 48.6% | 19.8% | 0.0% | 0.0% | 0.3% | 0.0% | 0.3% | 0.1% | 0.0% |
| KAS28 | 28.7% | 28.2% | 43.1% | 0.0% | 0.0% | 0.0% | 0.0% | 0.0% | 0.0% | 0.0% |
| KAS5 | 27.0% | 14.3% | 58.7% | 0.0% | 0.0% | 0.0% | 0.0% | 0.0% | 0.0% | 0.0% |
| KAS75 | 30.8% | 45.0% | 23.8% | 0.0% | 0.0% | 0.0% | 0.0% | 0.4% | 0.1% | 0.0% |
| KAS51 | 30.8% | 35.2% | 33.6% | 0.0% | 0.2% | 0.0% | 0.0% | 0.1% | 0.0% | 0.0% |
| KAS41 | 30.4% | 30.8% | 38.7% | 0.0% | 0.0% | 0.0% | 0.0% | 0.1% | 0.0% | 0.0% |
| KAS2 | 29.1% | 23.0% | 47.9% | 0.0% | 0.0% | 0.0% | 0.0% | 0.0% | 0.0% | 0.0% |
| KAS50 | 30.2% | 28.8% | 40.8% | 0.0% | 0.0% | 0.0% | 0.0% | 0.1% | 0.0% | 0.0% |
| KAS29 | 29.1% | 22.4% | 48.5% | 0.0% | 0.0% | 0.0% | 0.0% | 0.0% | 0.0% | 0.0% |
| KAS10 | 29.6% | 18.9% | 51.5% | 0.0% | 0.0% | 0.0% | 0.0% | 0.0% | 0.0% | 0.0% |
| KAS25 | 32.4% | 30.2% | 37.5% | 0.0% | 0.0% | 0.0% | 0.0% | 0.0% | 0.0% | 0.0% |
| KAS27 | 32.1% | 25.1% | 42.5% | 0.0% | 0.0% | 0.0% | 0.0% | 0.3% | 0.0% | 0.0% |
| KAS11 | 31.6% | 17.8% | 50.6% | 0.0% | 0.0% | 0.0% | 0.0% | 0.0% | 0.0% | 0.0% |
| KAS15 | 32.5% | 21.5% | 46.0% | 0.0% | 0.0% | 0.0% | 0.0% | 0.0% | 0.0% | 0.0% |
| KAS52 | 37.1% | 20.6% | 42.1% | 0.0% | 0.0% | 0.0% | 0.0% | 0.1% | 0.0% | 0.0% |

| Table 3 - percent shrinkages at temperatures and times indicated [°C/hours] | | | | | | |
|---|---|---|---|---|---|---|
| | 1000/24 | 1100/24 | 11200/24 | 1300/24 | 1400/24 | 1500/24 |
| KAS36 | 3.8 | 4.1 | | 5.2 | | |
| KAS35 | 2.6 | 5.4 | | 9.7 | | |
| KAS61 | 1.8 | 2.3 | 2.8 | 2.6 | 2.7 | 2.0 |
| KMAS4 | | | | | 3.7 | melted |
| KAS33 | 2.1 | 2.1 | 2.3 | 1.9 | 1.9 | 2.0 |
| KAS56 | 1.5 | 2.0 | | 2.8 | 3.3 | |
| KAS66 | 1.8 | 1.9 | 2.4 | 2.6 | 2.9 | 2.6 |
| KAS60 | 2.5 | 2.5 | 2.6 | 3.8 | 3.9 | 3.5 |
| KAS4 | | | | 0.9 | 1.0 | 0.4 |
| KAS18 | **11.0** | | | 10.9 | | |
| KMAS1 | 2.5 | 2.1 | 2.2 | 2.9 | 3.2 | Melted 1450 |
| KMAS3 | 1.4 | 1.2 | 0.8 | 1.7 | 1.8 | melted |
| KAS40 | | | | | 0.5 | 0.5 |
| KAS9 | | | | 1.4 | 1.5 | 1.2 |
| KAS47 | | | | | 1.2 | 0.0 |
| KAS3 | | | | 2.3 | 2.5 | 2.9 |
| KAS 43-2 | | | | 3.8 | 3.8 | 4.0 |
| KAS13 | | | | 0.8 | 1.1 | 1.4 |
| KAS 47-2 | | | | 6.2 | | |
| KAS17 | | | | 0.8 | 1.1 | 1.4 |
| KCAS1 | | 0.8 | | | 1.1 | 1.9 |
| KAS45 | 0.7 | | 0.6 | 1.3 | | 1.2 |
| KAS78 | 3.6 | 3.7 | 3.8 | 3.8 | 3.9 | 4.1 |
| KAS 45-2 | | | | 2.3 | 2.3 | 2.8 |
| KAS77 | 0.6 | 2.7 | 2.7 | 2.8 | 2.8 | 4.1 |
| KAS 67-1 | | | | 16.0 | | |
| KAS46 | | | | | 1.4 | 0.0 |
| KAS67-2 | | | | 21.7 | | |
| KNAS1 | 2.1 | 3.4 | 4.3 | | | |
| KAS82-2 | | | | 16.2 | | |
| KAS81 | 0.0 | 1.0 | 1.0 | 1.1 | 1.2 | 1.3 |
| KACaSrS02 | 1.3 | 1 | 1 | 1 | 4.4 | |
| KAS76 | 0.2 | 2.3 | 1.2 | 1.2 | 1.2 | 1.3 |
| KAS83 | 2.7 | 3.9 | 3.8 | 3.9 | 4.0 | 4.8 |
| KAS79 | 0.0 | 1.1 | 1.2 | 1.3 | 1.3 | 1.3 |
| KNAS2 | 1.6 | 2.2 | 2.5 | 4.5 | 4.4 | |
| KAS 76-3 | | | | 10.7 | | |
| KAS67 | 0.7 | 1.8 | 1.7 | 1.8 | 1.2 | 1.4 |
| KAS80 | 0.0 | 0.3 | 0.2 | 0.2 | 0.1 | 0.2 |
| KAS82 | 4.0 | | | | | |
| KAS76-2 | | | | 6.2 | | |
| KMAS6 | | 0.4 | | | 1.4 | 4.1 |
| KAS84 | 0.0 | 0.9 | 0.8 | 1.0 | 1.0 | 1.2 |
| KAS86 | | | | 15.1 | | |
| KAS85 | **4.9** | | | | | |
| KSAS1 | 0.0 | 0.0 | 0.0 | 0.6 | 0.0 | 0.5 |
| KAS77-2 | | | | 0.4 | 0.4 | 0.6 |
| KAS 77-3 | | | | 3.5 | 3.5 | 4.1 |
| KAMgSrS02 | 1.0 | 1.0 | 0.9 | 1.9 | 4.9 | melted |
| KAS34 | 1.6 | 2.4 | 2.5 | 3.7 | 3.8 | 3.8 |
| KAS44 | 0.6 | 0.0 | 0.0 | 0.4 | 0.0 | 0.0 |
| KAS 44-2 | | | | 1.5 | 1.7 | 2.9 |
| KAS32 | 1.9 | 1.9 | 1.7 | 2.0 | 2.1 | 2.3 |
| Kas 132 | 1.33 | 1.3 | 1.2 | 1.48 | 2.68 | melted |
| Kas 117 | 1.9 | | | 2.0 | 2.2 | |
| Kas 118 | 2.0 | | | 2.0 | 5.0 | |
| Kas 120 | 2.7 | | | 2.8 | 3.2 | |
| Kas 135 | 1.5 | 1.34 | 1.18 | 2.34 | 5.54 | melted |
| KAS65 | 2.0 | 1.8 | 1.8 | 1.7 | 2.3 | 2.7 |
| Kas 136 | 1.91 | 1.87 | 1.92 | 2.19 | 2.95 | 4.82 |
| KAS55 | | 1.7 | | | 2.4 | 3.1 |
| KAS54 | | 1.8 | | | 1.9 | 2.0 |
| Kas 130 | 1.99 | 2.08 | 2.27 | 3.09 | 3.23 | melted |
| Kas 131 | 2.12 | 1.84 | 1.87 | 2.14 | 2.28 | melted |
| Kas 91 | 1.9 | 1.8 | 1.9 | 1.9 | 2.4 | 2.8 |
| Kas 133 | 1.99 | 1.9 | 1.97 | 1.78 | 1.83 | 2.74 |
| Kas 125 | 2.0 | 2.1 | 2.17 | 1.9 | 2.4 | 8.97 |
| Kas 142 | 1.74 | 1.94 | 2.04 | 2.65 | 3.11 | 4.18 |
| KAS30 | 1.4 | 1.5 | 1.5 | 1.1 | 1.2 | 1.0 |
| Kas 124 | 1.8 | 2.0 | 2.0 | 2.0 | 2.1 | 5.71 |
| Kas 127 | 2.0 | 1.8 | 2.19 | 2.3 | 2.6 | 3.29 |
| Kas 134 | 1.63 | 1.67 | 1.62 | 1.69 | 2.64 | melted |
| Kas 90 | 1.5 | 1.6 | 1.9 | 1.7 | 1.7 | 2.4 |
| Kas 114 | 2.2 | 2.2 | 2.1 | 2.1 | 2.3 | 6.2 |
| KSAS2 | 1.7 | 1.7 | | 1.9 | 2.1 | 10.4 |
| Kas 109 | | | | 2.7 | 2.7 | 2.9 |
| Kas 126 | 1.9 | 1.9 | 1.95 | 1.7 | 2 | 4.31 |
| Kas 104 | 1.8 | 1.9 | 2.1 | 2.0 | 2.0 | 2.7 |
| KAS31 | 2.3 | 2.4 | 2.7 | 3.7 | 3.8 | 3.8 |
| Kas 112 | 1.7 | 1.8 | 1.9 | 2.3 | 2.3 | melted |
| Kas 128 | 1.9 | 2.1 | 2.08 | 1.9 | 2.4 | 5.66 |
| Kas 106 | 1.7 | 1.9 | 1.9 | 1.9 | 2.1 | 2.8 |
| Kas 105 | 2.1 | 2.1 | 2.3 | 2.5 | 2.9 | 16.9 |
| Kas 92 | 1.8 | 1.7 | 1.7 | 1.8 | 1.8 | 2.3 |
| Kas 121 | 2.1 | | | 3.3 | 5.9 | |
| Kas 116 | 2.1 | 2.0 | 2.1 | 1.9 | 2.1 | 4.7 |
| Kas 94 | 1.9 | 1.9 | 2.4 | 1.8 | 3.2 | 12.5 |
| Kas 102 | 2.6 | 2.7 | 2.8 | 1.5 | 1.7 | 3.2 |
| Kas 93 | 1.5 | 1.4 | 1.6 | 1.8 | 1.9 | 7.4 |
| Kas 108 | | | | 1.8 | 1.8 | 2.0 |
| Kas 103 | 1.4 | 1.4 | 1.6 | 1.7 | 1.8 | 2.0 |
| Kas 96 | 2.1 | 2.2 | 2.2 | 2.5 | 2.7 | 8.6 |
| Kas 113 | | | | 2.7 | 2.9 | melted |
| Kas 99 | 2.1 | 2.1 | 2.0 | 2.0 | 1.7 | 3.4 |
| Kas 97 | 1.5 | 1.8 | 1.7 | 2.1 | 2.5 | 18.2 |
| Kas 89 | 1.6 | 1.7 | 1.5 | 1.6 | 1.8 | 2.0 |
| KCAS2 | | | | 2.5 | 2.4 | Melted |
| Kas 88 | 1.5 | 1.4 | 1.4 | 1.4 | 1.5 | 1.7 |
| Kas 87 | 1.1 | 1.3 | 1.2 | 1.1 | 1.2 | 2.3 |
| KAS 33-2 | | | | 5.7 | | |
| KAS59 | 2.4 | 2.5 | | 3.0 | 4.9 | |
| KAS63 | 1.3 | 1.4 | 1.8 | 2.5 | 3.8 | 4.7 |
| KAS64 | 2.5 | 2.7 | 3.3 | 3.7 | 4.0 | 6.0 |
| KAS63 | 1 | 1.2 | 1.8 | 2.5 | 2.8 | 3.7 |
| KAS71 | **4.7** | | | 6.6 | | |
| KAS73 | 1.5 | 1.7 | 2.4 | 2.7 | 3.6 | 7.1 |
| KAS72 | 6.5 | | | 8.5 | | |
| KAS74 | 5.6 | | | | | |
| Kas143 | 1.97 | 2.34 | 2.59 | 2.8 | | 4.45 |
| KAS53 | | 1.7 | | | 3.3 | 3.8 |
| KAS14 | 0.4 | | | 1.1 | 1.1 | 1.2 |
| KAS12 | 19.8 | | | 19.3 | | |
| KAS48 | 1.7 | 1.8 | 2.0 | 2.1 | 2.3 | 3.1 |
| KAS70 | 6.6 | | | | | |
| KAS69 | 6.0 | | | 7.2 | | |
| KAS37 | | | | | 1.5 | 1.6 |
| KAS62 | 0.6 | 0.6 | 0.7 | 2.3 | 3.8 | 5.3 |
| KAS68 | 6.6 | | | | | |
| KAS28 | 1.5 | 1.4 | 1.4 | 1.8 | 3.0 | 3.3 |
| KAS5 | 18.5 | | | 17.0 | | |
| KAS75 | 6.5 | | | 8.2 | | |
| KAS51 | 0.4 | 0.5 | 1.1 | 3.0 | 4.2 | 5.3 |
| KAS41 | | | | | 4.6 | |
| KAS2 | | | | 1.6 | 1.7 | 2.3 |
| KAS50 | 1.4 | 1.6 | 1.8 | 2.0 | 3.0 | 3.9 |
| KAS29 | 1.7 | 1.9 | 1.9 | 1.8 | 1.8 | 1.9 |
| KAS10 | | | | 3.6 | 3.7 | 3.6 |
| KAS25 | 0.9 | 1.4 | 1.7 | 1.5 | 3.9 | 5.0 |
| KAS27 | 1.9 | 2 | 2.1 | 2.2 | 2.8 | 2.8 |
| KAS11 | 2.4 | 0.0 | 5.4 | 6.3 | 7.0 | 6.8 |
| KAS15 | 2.9 | | | 2.6 | 2.6 | 2.8 |
| KAS52 | 1.0 | 0.7 | 0.1 | 1.3 | 1.0 | 0.3 |

| Table 4 - solubility in ppm | | | | | | | | |
|---|---|---|---|---|---|---|---|---|
| | Al₂O₃ | CaO | Fe₂O₃ | SrO | MgO | SiO₂ | K₂O | Total |
| KAS36 | 4 | 0 | 0 | | 0 | 3 | 28 | 35 |
| KAS35 | 4 | 0 | 0 | | 0 | 3 | 61 | 68 |
| KAS61 | 2 | 0 | 0 | | 0 | 3 | 419 | 424 |
| KMAS4 | 1 | 0 | 0 | | 3 | 1 | 20 | 25 |
| KAS33 | 3 | 0 | 0 | | 0 | 3 | 334 | 340 |
| KAS56 | 3 | 0 | 0 | | 0 | 2 | 433 | 438 |
| KAS66 | | | | | | | | |
| KAS60 | 1 | 0 | 0 | | 0 | 1 | 12 | 14 |
| KAS4 | 1 | 0 | 0 | | 0 | 1 | 17 | 19 |
| KAS18 | 2 | 0 | 0 | | 0 | 1 | 12 | 15 |
| KMAS1 | 1 | 0 | 0 | | 0 | 3 | 323 | 327 |
| KMAS3 | 1 | 0 | 0 | | 3 | 0 | 1 | 5 |
| KAS40 | 1 | 0 | 0 | | 0 | 1 | 8 | 10 |
| KAS9 | 3 | 0 | 0 | | 0 | 2 | 47 | 52 |
| KAS47 | 1 | 0 | 0 | | 0 | 3 | 161 | 165 |
| KAS3 | 0 | 0 | 0 | | 0 | 3 | 37 | 40 |
| KAS 43-2 | 16 | 0 | 0 | 0 | 0 | 21 | 195 | 232 |
| KAS13 | 1 | 0 | 0 | | 0 | 2 | 10 | 13 |
| KAS 47-2 | 2 | 0 | 0 | 0 | 0 | 3 | 330 | 335 |
| KAS17 | 2 | 0 | 0 | | 0 | 4 | 44 | 50 |
| KCAS1 | 18 | 2 | 0 | | 0 | 23 | 30 | 73 |
| KAS45 | 1 | 0 | 0 | | 0 | 1 | 4 | 6 |
| KAS78 | 2 | 0 | 0 | 0 | 2 | 2 | 129 | 135 |
| KAS 45-2 | 18 | 0 | 0 | 0 | 0 | 26 | 229 | 273 |
| KAS77 | 2 | 2 | 0 | 0 | 0 | 2 | 22 | 28 |
| KAS 67-1 | 36 | 0 | 0 | 0 | 0 | 19 | 34 | 89 |
| KAS46 | 4 | 0 | 0 | | 0 | 3 | 24 | 31 |
| KAS67-2 | 4 | 0 | 0 | 0 | 0 | 4 | 257 | 265 |
| KNAS1 | 5 | 0 | 0 | | 0 | 6 | 150 | 161 |
| KAS82-2 | 34 | 0 | 0 | 1 | 0 | 35 | 47 | 117 |
| KAS81 | 1 | 1 | 0 | 0 | 0 | 1 | 2 | 5 |
| KACaSrS02 | 1 | 8 | 0 | 0 | 0 | 3 | 863 | 875 |
| KAS76 | 2 | 0 | 0 | 1 | 0 | 2 | 43 | 48 |
| KAS83 | 2 | 2 | 0 | 1 | 0 | 3 | 99 | 107 |
| KAS79 | 2 | 0 | 0 | 0 | 0 | 2 | 24 | 28 |
| KNAS2 | 6 | 0 | 0 | | 0 | 11 | 74 | 91 |
| KAS 76-3 | 35 | 0 | 0 | 2 | 0 | 50 | 39 | 126 |
| KAS67 | 3 | 0 | 0 | 0 | 0 | 1 | 7 | 11 |
| KAS80 | 2 | 0 | 0 | 0 | 0 | 1 | 3 | 6 |
| KAS82 | 3 | 0 | 0 | 1 | 0 | 3 | 46 | 53 |
| KAS76-2 | 2 | 0 | 0 | 2 | 0 | 2 | 118 | 124 |
| KMAS6 | 5 | 0 | 0 | | 5 | 3 | 67 | 80 |
| KAS84 | 2 | 2 | 0 | 0 | 0 | 2 | 10 | 16 |
| KAS86 | 56 | 0 | 0 | 3 | 0 | 80 | 58 | 197 |
| KAS85 | 3 | 2 | 0 | 1 | 0 | 3 | 28 | 37 |
| KSAS1 | 12 | 1 | 0 | 1 | 3 | 13 | 16 | 46 |
| KAS77-2 | 2 | 2 | 0 | 0 | 0 | 0 | 4 | 8 |
| KAS 77-3 | 40 | 3 | 0 | 0 | 0 | 54 | 57 | 154 |
| KAMgSrS02 | 4 | 0 | 0 | 7 | 1 | 6 | 237 | 255 |
| KAS34 | 2 | 0 | 0 | | 0 | 2 | 154 | 158 |
| KAS44 | 3 | 0 | 0 | | 0 | 4 | 38 | 45 |
| KAS 44-2 | 28 | 0 | 0 | 0 | 0 | 38 | 207 | 273 |
| KAS32 | 5 | 0 | 0 | | 0 | 6 | 72 | 83 |
| Kas 132 | 5 | 2 | 0 | 0 | 1 | 5 | 174 | 188 |
| Kas 117 | 5 | 1 | 0 | 2 | 1 | 5 | 90 | 104 |
| Kas 118 | 6 | 2 | 0 | 2 | 0 | 6 | 98 | 114 |
| Kas 120 | 9 | 1 | 0 | 0 | 0 | 8 | 50 | 68 |
| Kas 135 | 7 | 1 | 0 | 5 | 1 | 7 | 88 | 109 |
| KAS65 | 5 | 0 | 0 | | 0 | 5 | 278 | 288 |
| Kas 136 | | | | | | | | |
| KAS55 | 14 | 1 | 1 | | 1 | 12 | 164 | 193 |
| KAS54 | 1 | 1 | 0 | | 0 | 2 | 96 | 100 |
| Kas 130 | 13 | 1 | 0 | 0 | 1 | 11 | 57 | 84 |
| Kas 131 | 14 | 1 | 0 | 1 | 0 | 11 | 33 | 60 |
| Kas 91 | 60 | 0 | 0 | 0 | 0 | 55 | 112 | 227 |
| Kas 133 | 13 | 1 | 0 | 0 | 0 | 9 | 45 | 69 |
| Kas 125 | 13 | 1 | 0 | 1 | 0 | 10 | 64 | 89 |
| Kas 142 | | | | | | | | |
| KAS30 | 15 | 0 | 0 | | 0 | 15 | 97 | 127 |
| Kas 124 | 11 | 1 | 0 | 0 | 1 | 8 | 75 | 96 |
| Kas 127 | 10 | 1 | 0 | 0 | 0 | 7 | 108 | 127 |
| Kas 134 | 12 | 1 | 0 | 2 | 0 | 10 | 68 | 94 |
| Kas 90 | 37 | 0 | 0 | 0 | 0 | 36 | 213 | 286 |
| Kas 114 | 8 | 1 | 0 | 1 | 0 | 7 | 41 | 58 |
| KSAS2 | 6 | 0 | 0 | 2 | 0 | 5 | 38 | 51 |
| Kas 109 | 16 | 0 | 0 | 0 | 0 | 12 | 27 | 55 |
| Kas 126 | 9 | 1 | 0 | 0 | 1 | 6 | 122 | 139 |
| Kas 104 | 62 | 0 | 0 | 0 | 2 | 65 | 99 | 228 |
| KAS31 | 11 | 0 | 0 | | 0 | 8 | 52 | 71 |
| Kas 112 | 15 | 0 | 0 | 0 | 1 | 13 | 34 | 63 |
| Kas 128 | 10 | 1 | 0 | 2 | 0 | 8 | 75 | 98 |
| Kas 106 | 62 | 0 | 0 | 2 | 0 | 69 | 101 | 234 |
| Kas 105 | 55 | 3 | 0 | 0 | 0 | 66 | 123 | 247 |
| Kas 92 | 42 | 0 | 0 | 3 | 0 | 45 | 168 | 258 |
| Kas 121 | 10 | 1 | 0 | 0 | 1 | 9 | 50 | 71 |
| Kas 116 | 6 | 1 | 0 | 2 | 0 | 5 | 84 | 97 |
| Kas 94 | 39 | 2 | 0 | 2 | 0 | 46 | 161 | 250 |
| Kas 102 | 63 | 0 | 0 | 0 | 0 | 72 | 106 | 241 |
| Kas 93 | 32 | 0 | 0 | 3 | 1 | 36 | 199 | 271 |
| Kas 108 | 12 | 0 | 0 | 0 | 0 | 9 | 19 | 40 |
| Kas 103 | 59 | 0 | 0 | 0 | 0 | 65 | 100 | 224 |
| Kas 96 | 61 | 2 | 0 | 0 | 0 | 70 | 99 | 232 |
| Kas 113 | 10 | 1 | 0 | 0 | 0 | 8 | 30 | 49 |
| Kas 99 | 40 | 0 | 0 | 0 | 1 | 44 | 148 | 233 |
| Kas 97 | 8 | 2 | 0 | 0 | 1 | 8 | 298 | 317 |
| Kas 89 | 69 | 0 | 0 | 0 | 0 | 78 | 84 | 231 |
| KCAS2 | 2 | 1 | 0 | | 0 | 2 | 177 | 182 |
| Kas 88 | 50 | 0 | 0 | 0 | 0 | 64 | 131 | 245 |
| Kas 87 | 54 | 0 | 0 | 0 | 0 | 66 | 64 | 184 |
| KAS 33-2 | 9 | 0 | 0 | 0 | 0 | 8 | 259 | 276 |
| KAS59 | 4 | 0 | 0 | | 0 | 4 | 137 | 145 |
| KAS63 | 14 | 0 | 0 | 0 | 0 | 25 | 181 | 220 |
| KAS64 | 9 | 0 | 0 | 0 | 0 | 15 | 201 | 225 |
| KAS63 | 7 | 0 | 0 | | 0 | 18 | 346 | 371 |
| KAS71 | 96 | 0 | 0 | 1 | 0 | 3 | 512 | 612 |
| KAS73 | 10 | 0 | 0 | 0 | 0 | 3 | 355 | 368 |
| KAS72 | 667 | 0 | 0 | 0 | 0 | 7 | 2060 | 2734 |
| KAS74 | 5 | 0 | 0 | 0 | 0 | 4 | 509 | 518 |
| Kas143 | | | | | | | | |
| KAS53 | 20 | 0 | 0 | | 0 | 12 | 66 | 98 |
| KAS14 | 0 | 0 | 0 | | 0 | 2 | 101 | 103 |
| KAS12 | 0 | 0 | 0 | | 0 | 14 | 216 | 230 |
| KAS48 | 15 | 0 | 0 | | 0 | 17 | 93 | 125 |
| KAS70 | 1109 | 0 | 0 | 0 | 0 | 8 | 1735 | 2852 |
| KAS69 | 101 | 0 | 0 | 0 | 0 | 2 | 557 | 660 |
| KAS37 | 5 | 0 | 0 | | 0 | 6 | 61 | 72 |
| KAS62 | 8 | 0 | 0 | | 0 | 21 | 287 | 316 |
| KAS68 | 1220 | 0 | 0 | 0 | 0 | 11 | 2187 | 3418 |
| KAS28 | 12 | 0 | 0 | | 0 | 11 | 168 | 191 |
| KAS5 | 0 | 0 | 0 | | 0 | 3 | 356 | 359 |
| KAS75 | 20 | 0 | 0 | 0 | 0 | 5 | 350 | 375 |
| KAS51 | 12 | 0 | 0 | | 0 | 17 | 156 | 185 |
| KAS41 | 3 | 0 | 0 | | 0 | 3 | 234 | 240 |
| KAS2 | 7 | 0 | 0 | | 0 | 9 | 202 | 218 |
| KAS50 | 15 | 0 | 0 | | 0 | 13 | 21 | 49 |
| KAS29 | 6 | 0 | 0 | | 0 | 7 | 255 | 268 |
| KAS10 | 2 | 0 | 0 | | 0 | 2 | 460 | 464 |
| KAS25 | 6 | 0 | 0 | | 0 | 8 | 351 | 365 |
| KAS27 | 4 | 0 | 0 | | 0 | 5 | 303 | 312 |
| KAS11 | 0 | 0 | 0 | | 0 | 14 | 400 | 414 |
| KAS15 | 1 | 0 | 0 | | 0 | 3 | 265 | 269 |
| KAS52 | 7 | 0 | 0 | | 0 | 5 | 201 | 213 |

| Table 5 - additional compositions in weight percent | | | | | | | | | | |
|---|---|---|---|---|---|---|---|---|---|---|
| | K₂O | Al₂O₃ | SiO₂ | B₂O₃ | MgO | CaO | SrO | Na₂0 | Zr0₂ | Fe₂O₃ |
| Kas144 | 28.7 | 32.5 | 37.5 | 0.0 | 0.1 | 0.2 | 0.0 | 0.1 | 0.0 | 0.0 |
| Kas145 | 27.0 | 37.1 | 35.6 | 0.0 | 0.1 | 0.0 | 0.0 | 0.2 | 0.0 | 0.0 |
| Kas146 | 25.0 | 37.6 | 33.8 | 0.6 | 1.3 | 0.0 | 0.0 | 0.2 | 0.0 | 0.0 |
| Kas147 | 25.4 | 37.9 | 32.3 | 0.8 | 1.2 | 0.0 | 0.0 | 0.1 | 0.0 | 0.0 |
| Kas148 | 26.3 | 37.5 | 33.4 | 1.0 | 1.2 | 0.0 | 0.0 | 0.2 | 0.0 | 0.0 |
| Kas 149 | 26.1 | 38.0 | 33.9 | 0.5 | 0.7 | 0.0 | 0.0 | 0.2 | 0.0 | 0.0 |
| Kas 150 | 28.3 | 35.3 | 35.5 | 0.0 | 0.0 | 0.0 | 0.0 | 0.2 | 0.0 | 0.1 |
| Kas 152 | 28.6 | 36.9 | 34.1 | 0.0 | 0.0 | 0.0 | 0.0 | 0.2 | 0.0 | 0.0 |
| Kas 155 | 28.1 | 36.6 | 35.0 | 0.0 | 0.0 | 0.0 | 0.0 | 0.2 | 0.0 | 0.0 |
| Kas 158 | 27.3 | 37.0 | 34.7 | 0.0 | 0.0 | 0.0 | 0.0 | 0.2 | 0.0 | 0.0 |
| Kas 159 | 26.6 | 38.1 | 35.6 | 0.0 | 0.0 | 0.0 | 0.0 | 0.2 | 0.0 | 0.0 |
| Kas 161 | 27.3 | 38.8 | 34.0 | 0.0 | 0.0 | 0.0 | 0.0 | 0.2 | 0.0 | 0.0 |
| Kas 162 | 29.9 | 38.8 | 30.7 | 0.0 | 0.0 | 0.0 | 0.0 | 0.2 | 0.0 | 0.0 |
| Kas 164 | 28.5 | 39.5 | 31.6 | 0.0 | 0.0 | 0.0 | 0.0 | 0.3 | 0.0 | 0.0 |
| Kas 165 | 29.5 | 37.8 | 32.2 | 0.0 | 0.0 | 0.0 | 0.0 | 0.3 | 0.0 | 0.0 |
| Kas 166 | 25.0 | 39.9 | 34.6 | 0.6 | 0.0 | 0.0 | 0.0 | 0.2 | 0.0 | 0.0 |
| Kas 167 | 24.2 | 40.2 | 34.2 | 1.1 | 0.1 | 0.0 | 0.0 | 0.2 | 0.0 | 0.0 |
| Kas 168 | 27.2 | 33.9 | 35.2 | 0.0 | 2.5 | 0.0 | 0.0 | 0.3 | 0.0 | 0.0 |
| Kas 169 | 27.4 | 33.0 | 37.0 | 0.0 | 1.4 | 0.0 | 0.0 | 0.2 | 0.0 | 0.0 |
| Kas 170 | 26.1 | 38.6 | 33.5 | 0.5 | 1.2 | 0.0 | 0.0 | 0.3 | 0.0 | 0.0 |
| Kas 171 | 25.3 | 37.7 | 33.2 | 1.1 | 2.3 | 0.0 | 0.0 | 0.2 | 0.0 | 0.0 |
| Kas 172 | 27.7 | 40.0 | 31.4 | 0.4 | 0.0 | 0.0 | 0.0 | 0.2 | 0.0 | 0.0 |
| Kas 173 | 27.5 | 39.8 | 32.0 | 0.7 | 0.0 | 0.0 | 0.0 | 0.2 | 0.0 | 0.0 |
| Kas 174 | 28.9 | 37.2 | 31.9 | 0.0 | 1.2 | 0.0 | 0.0 | 0.2 | 0.0 | 0.0 |
| Kas 175 | 29.5 | 36.8 | 31.2 | 0.0 | 2.4 | 0.0 | 0.0 | 0.2 | 0.0 | 0.0 |
| Kas 176 | 27.7 | 38.5 | 31.9 | 0.3 | 1.2 | 0.0 | 0.0 | 0.3 | 0.0 | 0.0 |
| Kas 177 | 27.2 | 39.1 | 30.5 | 0.9 | 2.2 | 0.0 | 0.0 | 0.2 | 0.0 | 0.0 |
| Kas 178 | 27.3 | 38.0 | 34.4 | 0.8 | 0.0 | 0.0 | 0.0 | 0.2 | 0.0 | 0.0 |
| Kas 179 | 26.4 | 38.5 | 34.4 | 0.8 | 0.0 | 0.0 | 0.0 | 0.2 | 0.0 | 0.0 |
| Kas 180 | 27.9 | 36.6 | 34.0 | 0.0 | 1.2 | 0.0 | 0.0 | 0.3 | 0.0 | 0.1 |
| Kas 181 | 28.3 | 35.7 | 33.9 | 0.0 | 2.3 | 0.0 | 0.0 | 0.3 | 0.0 | 0.1 |
| Kas 182 | 26.9 | 37.8 | 33.7 | 0.5 | 1.2 | 0.0 | 0.0 | 0.2 | 0.0 | 0.0 |
| Kas 183 | 25.9 | 37.1 | 33.4 | 1.1 | 2.3 | 0.0 | 0.0 | 0.2 | 0.0 | 0.1 |
| Kas 184 | 26.3 | 37.3 | 33.2 | 0.0 | 3.2 | 0.0 | 0.0 | 0.2 | 0.0 | 0.0 |
| Kas 185 | 25.8 | 36.4 | 32.8 | 0.0 | 4.3 | 0.0 | 0.0 | 0.2 | 0.0 | 0.0 |

| Table 6 - additional compositions in mol% | | | | | | | | | | |
|---|---|---|---|---|---|---|---|---|---|---|
| | K₂O | Al₂O₃ | SiO₂ | B₂O₃ | MgO | CaO | SrO | Na₂O | ZrO₂ | Fe₂O₃ |
| Kas144 | 24.3% | 25.4% | 49.7% | 0.0% | 0.1% | 0.3% | 0.0% | 0.2% | 0.0% | 0.0% |
| Kas145 | 23.0% | 29.1% | 47.5% | 0.0% | 0.1% | 0.0% | 0.0% | 0.2% | 0.0% | 0.0% |
| Kas146 | 21.4% | 29.8% | 45.4% | 0.7% | 2.5% | 0.0% | 0.0% | 0.2% | 0.0% | 0.0% |
| Kas147 | 22.1% | 30.4% | 44.0% | 0.9% | 2.4% | 0.0% | 0.0% | 0.2% | 0.0% | 0.0% |
| Kas148 | 22.3% | 29.4% | 44.5% | 1.1% | 2.4% | 0.0% | 0.0% | 0.2% | 0.0% | 0.0% |
| Kas 149 | 22.3% | 30.1% | 45.6% | 0.5% | 1.3% | 0.0% | 0.0% | 0.2% | 0.0% | 0.0% |
| Kas 150 | 24.2% | 27.9% | 47.6% | 0.0% | 0.1% | 0.0% | 0.0% | 0.2% | 0.0% | 0.0% |
| Kas 152 | 24.6% | 29.2% | 45.9% | 0.0% | 0.1% | 0.0% | 0.0% | 0.2% | 0.0% | 0.0% |
| Kas 155 | 24.0% | 28.9% | 46.8% | 0.0% | 0.1% | 0.0% | 0.0% | 0.2% | 0.0% | 0.0% |
| Kas 158 | 23.5% | 29.4% | 46.8% | 0.0% | 0.1% | 0.0% | 0.0% | 0.3% | 0.0% | 0.0% |
| Kas 159 | 22.5% | 29.9% | 47.3% | 0.0% | 0.1% | 0.0% | 0.0% | 0.2% | 0.0% | 0.0% |
| Kas 161 | 23.4% | 30.7% | 45.6% | 0.0% | 0.1% | 0.0% | 0.0% | 0.2% | 0.0% | 0.0% |
| Kas 162 | 26.2% | 31.4% | 42.1% | 0.0% | 0.1% | 0.0% | 0.0% | 0.2% | 0.0% | 0.0% |
| Kas 164 | 24.8% | 31.8% | 43.0% | 0.0% | 0.1% | 0.0% | 0.0% | 0.3% | 0.0% | 0.0% |
| Kas 165 | 25.5% | 30.3% | 43.8% | 0.0% | 0.1% | 0.0% | 0.0% | 0.3% | 0.0% | 0.0% |
| Kas 166 | 21.3% | 31.4% | 46.2% | 0.7% | 0.1% | 0.0% | 0.0% | 0.3% | 0.0% | 0.0% |
| Kas 167 | 20.7% | 31.7% | 45.8% | 1.3% | 0.1% | 0.0% | 0.0% | 0.3% | 0.0% | 0.0% |
| Kas 168 | 22.7% | 26.0% | 46.0% | 0.0% | 4.9% | 0.0% | 0.0% | 0.4% | 0.0% | 0.0% |
| Kas 169 | 22.9% | 25.5% | 48.6% | 0.0% | 2.7% | 0.0% | 0.0% | 0.3% | 0.0% | 0.0% |
| Kas 170 | 22.1% | 30.2% | 44.5% | 0.6% | 2.3% | 0.0% | 0.0% | 0.3% | 0.0% | 0.0% |
| Kas171 | 21.2% | 29.2% | 43.6% | 1.2% | 4.4% | 0.0% | 0.0% | 0.3% | 0.0% | 0.0% |
| Kas 172 | 24.1% | 32.1% | 42.9% | 0.5% | 0.1% | 0.0% | 0.0% | 0.3% | 0.0% | 0.0% |
| Kas 173 | 23.7% | 31.8% | 43.3% | 0.8% | 0.1% | 0.0% | 0.0% | 0.3% | 0.0% | 0.0% |
| Kas 174 | 24.8% | 29.5% | 42.9% | 0.0% | 2.5% | 0.0% | 0.0% | 0.3% | 0.0% | 0.0% |
| Kas 175 | 24.9% | 28.7% | 41.3% | 0.0% | 4.8% | 0.0% | 0.0% | 0.3% | 0.0% | 0.0% |
| Kas 176 | 23.7% | 30.4% | 42.8% | 0.4% | 2.4% | 0.0% | 0.0% | 0.3% | 0.0% | 0.0% |
| Kas 177 | 23.1% | 30.6% | 40.5% | 1.0% | 4.4% | 0.0% | 0.0% | 0.3% | 0.0% | 0.0% |
| Kas 178 | 23.2% | 29.8% | 45.7% | 0.9% | 0.1% | 0.0% | 0.0% | 0.3% | 0.0% | 0.0% |
| Kas 179 | 22.4% | 30.3% | 45.9% | 0.9% | 0.1% | 0.0% | 0.0% | 0.3% | 0.0% | 0.0% |
| Kas 180 | 23.6% | 28.6% | 45.1% | 0.0% | 2.4% | 0.0% | 0.0% | 0.4% | 0.0% | 0.0% |
| Kas 181 | 23.6% | 27.4% | 44.2% | 0.0% | 4.5% | 0.0% | 0.0% | 0.3% | 0.0% | 0.0% |
| Kas 182 | 22.7% | 29.5% | 44.7% | 0.5% | 2.3% | 0.0% | 0.0% | 0.3% | 0.0% | 0.0% |
| Kas 183 | 21.6% | 28.7% | 43.7% | 1.2% | 4.4% | 0.0% | 0.0% | 0.3% | 0.0% | 0.0% |
| Kas 184 | 21.8% | 28.6% | 43.1% | 0.0% | 6.1% | 0.0% | 0.0% | 0.3% | 0.0% | 0.0% |
| Kas 185 | 21.2% | 27.8% | 42.4% | 0.0% | 8.3% | 0.0% | 0.0% | 0.3% | 0.0% | 0.0% |

**Table 3 - additional compositions - percent shrinkages at temperatures and times indicated [°C/hours]**

| | 1000/24 | 1100/24 | 1200/24 | 1300/24 | 1400/24 | 1500/24 |
|---|---|---|---|---|---|---|
| Kas144 | 1.54 | 1.62 | 1.66 | 1.64 | 1.92 | 3.12 |
| Kas145 | 1.73 | 1.76 | 1.61 | 1.54 | 1.86 | 2.45 |
| Kas146 | 1.69 | 1.73 | 1.83 | 2.05 | 2.34 | 3.69 |
| Kas147 | 1.77 | 1.88 | 1.84 | 2.23 | 2.48 | 3.59 |
| Kas148 | 1.86 | 1.97 | 1.90 | 2.37 | 2.59 | 3.72 |
| Kas 149 | 1.86 | 1.86 | 1.82 | 2.23 | 2.52 | 2.13 |
| Kas 150 | | | | | 1.87 | |
| Kas 152 | | | | | 2.42 | |
| Kas 155 | | | | | 1.96 | |
| Kas 158 | | | | | 2.05 | |
| Kas 159 | | | | | 1.92 | |
| Kas 161 | | | | | 2.59 | |
| Kas 162 | | | | | 2.44 | |
| Kas 164 | | | | | 2.61 | |
| Kas 165 | | | | | 2.75 | |
| Kas 166 | | | | | 2.21 | |
| Kas 167 | | | | | 2.63 | |
| Kas 168 | | | | | 2.00 | |
| Kas 169 | | | | | 1.88 | |
| Kas 170 | | | | | 2.33 | |
| Kas 171 | | | | | 2.38 | |
| Kas 172 | | | | | 2.69 | |
| Kas 173 | | | | | 2.4 | |
| Kas 174 | | | | | 2.41 | |
| Kas 175 | | | | | 2.19 | |
| Kas 176 | | | | | 2.6 | |
| Kas 177 | | | | | 2.74 | |
| Kas 178 | | | | | 1.57 | |
| Kas 179 | | | | | 1.86 | |
| Kas 180 | | | | | 2.22 | |
| Kas 181 | | | | | 2.25 | |
| Kas 182 | | | | | 2.30 | |
| Kas 183 | | | | | 2.83 | |
| Kas 184 | | | | | 2.27 | |
| Kas 185 | | | | | 2.55 | |

**Table 8 - selected additional compositions - solubility in ppm**

| | Al₂O₃ | CaO | Fe₂O₃ | SrO | MgO | SiO₂ | K₂O | Total |
|---|---|---|---|---|---|---|---|---|
| Kas144 | 12.17 | 2.277 | 0.4756 | 0.1492 | 0.3799 | 12.3 | 49.31 | 77 |
| Kas145 | 3.516 | 1.323 | 0.3032 | 0.1067 | 0.2293 | 2.02 | 374.6 | 382 |
| Kas146 | 9.01 | 1.214 | 0.599 | 0.1135 | 0.91 | 7.54 | 104.3 | 124 |
| Kas147 | 5.59 | 1.125 | 0.2577 | 0.0936 | 0.87 | 3.97 | 199.5 | 211 |
| Kas148 | 16.5 | 0.877 | 0.1809 | 0.0889 | 1.037 | 15.12 | 54.7 | 89 |
| Kas 149 | 13.52 | 1.068 | 0.2025 | 0.107 | 0.737 | 11.85 | 76 | 103 |
| Kas 150 | 11.7 | 1.161 | 0.2781 | 0.0377 | 0.1287 | 11.4 | 47.3 | 72 |
| Kas 152 | 8.06 | 1.195 | 0.2665 | 0.0487 | 0.1259 | 8.16 | 149.6 | 167 |
| Kas 155 | 8.68 | 1.275 | 0.2705 | 0.0289 | 0.016 | 8.32 | 112.3 | 131 |
| Kas 158 | 4.966 | 1.21 | 0.2564 | 0.0288 | 0.0768 | 4.36 | 313.2 | 324 |
| Kas 159 | 5.8 | 0.977 | 0.2575 | 0.0297 | 0.0224 | 5.01 | 219 | 231 |
| Kas 161 | 5.62 | 0.517 | 0.1504 | 0 | 0 | 4.709 | 270.7 | 282 |
| Kas 162 | 9.43 | 0.82 | 0.1958 | 0.1026 | 0.1114 | 8.36 | 193 | 212 |

Features claimed in the parent application, and repeated here to permit further division should such prove necessary, were:-
1. Inorganic fibres having the composition:-
   - Al₂O₃: 10.2 - 55.5 mol%
   - K₂O: 12 - 37.1 mol%
   - SiO₂: 17.7 - 71.4 mol%
   - B₂O₃: 0.1 -10 mol%
   in which SiO₂ + Al₂O₃ + K₂O >= 77.7 mol% and with the total constituents not exceeding 100mol%.
2. Inorganic fibres as described in feature 1, additionally comprising:-
   - MgO: 0.1 -10 mol%.
3. Inorganic fibres, as described in Feature 1 or Feature 2, in which Al₂O₃ is present in the amount 15 - 40 mol%.
4. Inorganic fibres, as described in Feature 3, in which Al₂O₃ is present in an amount greater than 25 mol%.
5. Inorganic fibres, as described in any one of Features 1 to 4, in which K₂O is present in the amount 13.5-30 mol%
6. Inorganic fibres, as described in any one of Features 1 to 5, in which SiO₂ is present in the amount 30-65 mol%.
7. Inorganic fibres, as described in Feature 6, in which SiO₂ is present in the amount 40-52 mol%.
8. Inorganic fibres, as described in any one of Features 1 to 6 in which the constituents SiO₂, Al₂O3, and K₂O are present in the amounts:-
   - Al₂O₃: 30.7±5 mol%
   - K₂O: 20.4±5 mol%
   - SiO₂: 49±5.5 mol%.
9. Inorganic fibres, as described in Feature 8, in which the constituents SiO₂, Al₂O₃, and K₂O are present in the amounts:-
   - Al₂O₃: 30.5±2 mol%
   - K₂O: 20.3±2 mol%
   - SiO₂: 49.1±2.25 mol%.
10. Inorganic fibres, as described in Feature 8, in which the constituents SiO₂, Al₂O₃, and K₂O are present in the amounts:-
   - Al₂O₃: 31.0±2 mol%
   - K₂O: 23.2±2mol%
   - SiO₂: 45.8±2.3 mol%.
11. Inorganic fibres, as described in any one of Features 1 to 9, in which the amount of B₂O₃ is less than 7.5 mol%, or less than 5 mol%, or less than 4.5 mol%, or less than 4 mol%, or less than 3.5 mol%, or less than 3 mol%, or less than 2.5mol% or less than 2 mol%, or less than 1.5 mol%, or less than 1 mol%, or in the range 0.2 - 2 mol%.
12. Inorganic fibres, as described in any one of Features 2 to 10, in which the amount of MgO is less than 5 mol%, or less than 3mol%, or less than 2 mol%, or less than 1.5 mol%, or in the range 0.1 to 0.5 mol%.
13. Inorganic fibres, as described in any one of Features 2 to 10, in which the amount of B₂O₃ is less than 2mol%, and the amount of MgO is less than 3mol%.
14. Inorganic fibres, as described in any one of Features 1 to 1, in which the amount of K₂O +(CaO + MgO + Na₂O + BaO if present) is greater than 18% by weight.
15. Inorganic fibres as described in any one of Features 1 to 14, in which the amount of B₂O₃ is less than 3.1wt%.
16. Inorganic fibres, as described in any one of Features 1 to 15 in which SiO₂ + Al₂O₃ + K₂O >= 90 mol%.
17. Inorganic fibres, as described in any one of Features 1 to 16 in which SiO₂ + Al₂O₃ + K₂O >= 95 mol%.
18. Thermal insulation comprising inorganic fibres as described in any one of Features 1 to 17.
19. Thermal insulation, as described in Feature 18, in which the insulation is in the form of blanket.
20. Mastics comprising inorganic fibres as described in any one of Features 1 to 17.
21. Composite materials comprising inorganic fibres as described in any one of Features 1 to 17.
22. Support structures for catalyst bodies comprising inorganic fibres as described in any one of Features 1 to 17.
23. Friction materials comprising inorganic fibres as described in any one of Features 1 to 17.

## Claims

1. Inorganic fibres in which the constituents SiO₂, Al₂O₃, K₂O, and MgO are present in the amounts:-
Al₂O₃ 30.7±5 mol%
K₂O 20.4±5 mol%
SiO₂ 49±5.5 mol%.
MgO 0.1 -10 mol%
with the total constituents not exceeding 100mol%.

2. Inorganic fibres as claimed in Claim 1, additionally comprising:-
B₂O₃ 0.1 -10 mol%.

3. Inorganic fibres, as claimed in Claim 1 or Claim 2, in which the constituents SiO₂, Al₂O₃, and K₂O are present in the amounts:-
Al₂O₃ 30.5±2 mol%
K₂O 20.3±2 mol%
SiO₂ 49.1±2.25 mol%.

4. Inorganic fibres, as claimed in any of Claims 1 to 3, in which the amount of MgO is less than 5 mol%, or less than 3mol%, or less than 2 mol%, or less than 1.5 mol%, or less than 1% or in the range 0.1 to 0.5 mol%.

5. Inorganic fibres, as claimed in any one of Claims 1 to 4, in which the amount of K₂O + MgO + (CaO + Na₂O + BaO if present) is greater than 18% by weight.

6. Inorganic fibres, as claimed in any one of Claims 1 to 5 in which SiO₂ + Al₂O₃ + K₂O >= 90 mol%.

7. Inorganic fibres, as claimed in any one of Claims 1 to 6 in which SiO₂ + Al₂O₃ + K₂O >= 95 mol%.

8. Thermal insulation comprising inorganic fibres as claimed in any one of Claims 1 to 7.

9. Thermal insulation, as claimed in Claim 8, in which the insulation is in the form of blanket.

10. Mastics comprising inorganic fibres as claimed in any one of Claims 1 to 7.

11. Composite materials comprising inorganic fibres as claimed in any one of Claims 1 to 7.

12. Support structures for catalyst bodies comprising inorganic fibres as claimed in any one of Claims 1 to 7.

13. Friction materials comprising inorganic fibres as claimed in any one of Claims 1 to 7.
